(19) Europäisches Patentamt
European Patent Office
Office européen des brevets

(11) **EP 4 692 708 A1**

(12) **EUROPEAN PATENT APPLICATION**
published in accordance with Art. 153(4) EPC

(43) Date of publication:
**11.02.2026 Bulletin 2026/07**

(21) Application number: 24796625.2

(22) Date of filing: **14.03.2024**

(51) International Patent Classification (IPC):
**F28D 15/02** (2006.01)      **F28D 15/04** (2006.01)
**H01L 23/427** (2006.01)      **H05K 7/20** (2006.01)

(52) Cooperative Patent Classification (CPC):
**F28D 15/0233; F28D 15/02; F28D 15/04;**
**F28D 15/046; H01L 23/427; H05K 7/20**

(86) International application number:
**PCT/JP2024/010136**

(87) International publication number:
**WO 2024/224867 (31.10.2024 Gazette 2024/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **24.04.2023 JP 2023070713**

(71) Applicants:
• **Kagoshima University**
**Kagoshima-shi, Kagoshima 890-8580 (JP)**

• **Shikoku Instrumentation Co., Ltd.**
**Kagawa 764-8502 (JP)**

(72) Inventors:
• **MIZUTA, Kei**
**Kagoshima-shi, Kagoshima 890-8580 (JP)**
• **MIYOSHI, Hitoshi**
**Nakatado-gun, Kagawa 764-8502 (JP)**

(74) Representative: **v. Bezold & Partner**
**Patentanwälte - PartG mbB**
**Ridlerstraße 57**
**80339 München (DE)**

(54) **VAPOR CHAMBER DESIGNING METHOD, VAPOR CHAMBER MANUFACTURING METHOD, AND VAPOR CHAMBER**

(57)      A vapor chamber (1) includes a housing (50) having a flat plate shape and having an internal space (20), the housing (50) includes a heat receiving portion (3) that receives heat from a heat source body (2), a vapor channel (5) through which a coolant (CO) vaporized in the heat receiving portion (3) moves, and a capillary channel (4) through which the coolant (CO) liquefied by heat radiation is sent to the heat receiving portion (3) by a capillary force, and a plurality of spacers (42) that reinforces the housing (50) is arranged in the internal space (20) along a surface direction of the housing (50). In a case where a permissible amount of a bending deformation amount of the housing (50) is $\delta_c$ [mm], a modulus of longitudinal elasticity of the housing (50) is E [N/mm$^2$], a moment of inertia of area of the housing (50) is I [mm$^2$], and a uniform distribution load that is a load per unit length applied to the housing (50) by an internal pressure or an external pressure generated in the internal space (20) is w [N/mm], an interval $L_{sp}$ [mm] between the spacers (42) and bonding protrusions (17) adjacent to each other is prescribed in such a way as to satisfy an equation below.

$$L_{sp} < \sqrt[4]{\frac{384\delta_c EI}{5w}}$$

# FIG. 5A

## Description

Technical Field

The present disclosure relates to a designing method of a vapor chamber, a manufacturing method of the vapor chamber, and the vapor chamber.

Background Art

A vapor chamber or a flat heat pipe (hereinafter simply referred to as a vapor chamber) being one kind of a heat diffusion plate that diffuses heat received from a cooled object in a surface direction achieves heat transport by a coolant encapsulated in an internal space receiving heat, changing a phase, and circulating in the surface direction and a thickness direction. A liquefied coolant that receives heat by a heat receiving portion near the cooled object evaporates, vaporizes, and moves to a condensing portion in the surface direction and the thickness direction by a pressure difference in the internal space. The vaporized coolant that reaches the condensing portion discharges the heat, condenses, and liquefies. The liquefied coolant moves by action of a capillary force generated in an internal micro channel, and returns to the heat receiving portion (for example, see Patent Literature 1).

Citation List

Patent Literature

Patent Literature 1: Japanese Patent No. 4035155

Summary of Invention

Technical Problem

In an electronic part such as a semiconductor device, power of input power that is not used in work is converted to heat energy, and Joule heat is generated. In the electronic part, operation efficiency decreases with a temperature increase, a life is also reduced, and thus relatively high operation efficiency and a long life can be achieved as long as the temperature increase can be suppressed.

Joule heat is transferred from the electronic part into air or to a mounting substrate on which the electronic part is mounted. Therefore, a degree of the temperature increase of the electronic part itself is affected by heat transfer efficiency of the mounting substrate. The temperature increase of the electronic part is small when the heat transfer efficiency of the mounting substrate is high, and, conversely, the temperature increase of the electronic part is great when the heat transfer efficiency is low. Thus, a mounting substrate having high heat transfer efficiency is required to be used.

A metal core substrate using metal having high thermal conductivity such as copper is used as a substrate having high thermal conductivity. Copper has high thermal conductivity in metal, but the thermal conductivity is about 400 $[W \cdot m^{-1} K^{-1}]$. The vapor chamber described above has been receiving attention as a heat radiation member having thermal conductivity higher than that of metal such as copper. This is because the vapor chamber is a latent heat transport member that transports heat by a phase change of a coolant encapsulated inside a container having an airtightness structure, and has high heat diffusibility.

Further, a step of mounting an electronic part on a mounting substrate includes a reflow step of a surface mounting part. In the reflow step, solder is applied between a contact of a circuit provided in the substrate and a contact of a part, the solder is then melted in a heating furnace, and thus many parts are simultaneously mounted on the substrate. The substrate on which the electronic part is mounted is required to have heat resistance to the extent of not being deformed even when a temperature of a portion to which the solder is applied in the reflow is equal to or higher than a melting point of the solder. However, a heat-resistant temperature of a vapor chamber is generally about 150°C, and there is a problem in heat resistance in the reflow.

Further, when the vapor chamber is used as a mounting substrate, a laminating step of laminating the vapor chamber and a thin substrate by pressing is performed. Therefore, it is difficult to use, as the mounting substrate, the vapor chamber having low mechanical strength against external stress such as pressing. In a vapor chamber disclosed in Patent Literature 1 described above, a reinforcing portion is provided in an internal space in order to achieve mechanical strength against an increase in an internal pressure due to a temperature increase or the external stress described above. However, a place where the reinforcing portion is provided is limited to a vicinity of a coolant hole into which a coolant is injected.

Further, a liquefied coolant is affected by gravity in addition to a capillary force and a viscous force. When the capillary force is not sufficiently greater than the gravity, the gravity becomes a resistance force of the capillary force, depending on an installation posture of a heat diffusion plate, and thermal performance of the vapor chamber decreases. For the vapor chamber, it is desired that thermal performance does not decrease even when an installation posture changes.

There are various environments of installation of equipment in which the vapor chamber is incorporated, and there are also various resistance forces acting on the liquefied coolant, depending on an installation environment. For example, when the vapor chamber is installed in a moving body that performs an acceleration motion, an inertial force by the acceleration motion may also become a resistance force of the capillary force. When magnitude of the capillary force acting on a fluid mass of the liquefied coolant is not sufficient with respect to the resistance forces, thermal performance of the vapor chamber decreases.

The present disclosure has been made under the circumstances described above, and has an objective to provide a designing method of a vapor chamber that can suppress deformation due to an internal pressure increase by high heat or deformation by an external force, a manufacturing method of the vapor chamber, and the vapor chamber.

Further, the present disclosure has been made under the circumstances described above, and has an objective to provide a designing method of a vapor chamber that can perform continuous heat diffusion of an amount of heat equal to or higher than an amount of heat generated in a cooled object without an influence of a resistance force on thermal performance, a manufacturing method of the vapor chamber, and the vapor chamber.

Solution to Problem

To achieve the above objective, a designing method of a vapor chamber according to a first aspect of the present disclosure is executed by an information processing device, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,
in a case where a permissible amount of a bending deformation amount of the housing is $\delta_c$ [mm], a modulus of longitudinal elasticity of the housing is E [N/mm$^2$], a moment of inertia of area of the housing is I [mm$^2$], and a uniform distribution load that is a load per unit length applied to the housing by an internal pressure or an external pressure generated in the internal space is w [N/mm], an interval $L_{sp}$ [mm] between the reinforcing members adjacent to each other is prescribed in such a way as to satisfy an equation below.

[Math 1]

$$L_{sp} < \sqrt[4]{\frac{384\delta_c EI}{5w}}$$

The designing method of a vapor chamber may be configured in such a way that

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,

a condition that acceleration generated in the fluid mass by a capillary force applied to the fluid mass in the coupling portion is positive is a second condition,

a condition that a sum of work performed by a force applied to the fluid mass in the straight pipe portion and work performed by a force applied to the fluid mass in the coupling portion is positive is a third condition, and

a condition that a total amount of evaporation latent heat per unit time of the fluid mass returning from the capillary channel to the heat receiving portion exceeds an input heat amount per unit time from the cooled object to the heat receiving portion is a fourth condition,

the coolant and a material of the vapor chamber are selected and a value of a designing parameter according to a channel structure of the capillary channel is also determined in such a way as to satisfy all of the first condition, the second condition, and the fourth condition, or satisfy all of the first condition, the third condition, and the fourth condition.

A designing method of a vapor chamber according to a second aspect of the present disclosure is executed by an information processing device, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,

a condition that acceleration generated in the fluid mass by a capillary force applied to the fluid mass in the coupling portion is positive is a second condition,

a condition that a sum of work performed by a force applied to the fluid mass in the straight pipe portion and work performed by a force applied to the fluid mass in the coupling portion is positive is a third condition, and

a condition that a total amount of evaporation latent heat per unit time of the fluid mass returning from the capillary channel to the heat receiving portion exceeds an input heat amount per unit time from the cooled object to the heat receiving portion is a fourth condition,

the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition.

The designing method of a vapor chamber may be configured in such a way that,

in a case where acceleration generated in the fluid mass by a capillary force in the straight pipe portion is a $[m/s^2]$,
a density of the fluid mass is $\rho$ $[kg/m^3]$,
a volume of the fluid mass is $V$ $[m^3]$,
a capillary force in the straight pipe portion is $f_c$ $[N]$, and
a resistance force that prevents a movement of the fluid mass by the capillary force is $F_R$ $[N]$,

[Math 2]

$$a = \frac{f_c - F_R}{\rho V} > 0$$

is a condition equation representing the first condition,
the capillary channel includes
a second micro channel that extends in a thickness direction of the housing, and is two-dimensionally arranged at a uniform arrangement pitch in a surface direction of the housing,
the coupling portion includes

a first coupling portion that is not coupled to the second micro channel, and
a second coupling portion coupled to the second micro channel,

in a case where acceleration generated in the fluid mass by a capillary force in the first coupling portion is $a_{gap}$ [m/s$^2$], acceleration generated in the fluid mass by a capillary force in the second coupling portion is $a_{gap.btm}$ [m/s$^2$]
the capillary force generated in the first coupling portion is $f_{c.gap}$ [N], and
the capillary force generated in the second coupling portion is $f_{c.gap.btm}$ [N],

[Math 3]

$$a_{gap} = \frac{f_{c.gap} - F_R}{\rho V} > 0, \quad a_{gap.btm} = \frac{f_{c.gap.btm} - F_R}{\rho V} > 0$$

is a condition equation representing the second condition,
in a case where a length of the straight pipe portion in a direction in which the fluid mass flows is $L_{DT}$ [m],
a length of the coupling portion in a direction in which the fluid mass flows is $2W$ [m], and
a proportion of the number of the first coupling portions to the number of the coupling portions in which the fluid mass is present is $\varepsilon$,

[Math 4]

$$\rho V \left( L_{DT} a + (2W) \left( \varepsilon a_{gap} + (1 - \varepsilon) a_{gap.btm} \right) \right) > 0$$

is a condition equation representing the third condition, and,
in a case where an input heat amount per unit time from the cooled object in the heat receiving portion is $Q_{in}$ [W],
evaporation latent heat per unit mass of the fluid mass is $Q_{LH}$ [J/kg],
the number of the first micro channels in contact with an outer edge of the heat receiving portion is $N_{1.C}$,
the number of the second micro channels in contact with the heat receiving portion is $N_{2.P}$,
a cross-sectional area of a cross section orthogonal to a direction in which the fluid mass flows in an i-th (i = a natural number of 1 to $N_{1.C}$) first micro channel in contact with the outer edge of the heat receiving portion is $S_{A1.i}$ [m$^2$],
a cross-sectional area of a cross section orthogonal to a direction in which the fluid mass flows in a j-th (j = a natural number of 1 to $N_{2.P}$) second micro channel in contact with the heat receiving portion is $S_{A2.j}$ [m$^2$],
a speed at which the fluid mass flows in the i-th first micro channel in contact with the outer edge of the heat receiving portion is $v_{1.i}$ [m/s], and
a speed at which the fluid mass flows in the j-th second micro channel in contact with the heat receiving portion is $v_{2.j}$ [m/s],

[Math 5]

$$\rho Q_{LH} \left\{ \sum_{i=1}^{N_{1,C}} S_{A1.i}\, v_{1.i} + \sum_{j=1}^{N_{2,P}} S_{A2.j}\, v_{2.j} \right\} > Q_{in}$$

is a condition equation representing the fourth condition.

The designing method of a vapor chamber may be configured in such a way that

the straight pipe portion has a rectangular cross section orthogonal to a direction in which the fluid mass flows,
in a case where a distance between inner wall surfaces facing each other in the thickness direction in the straight pipe portion is 2H [m],
a distance between inner wall surfaces facing each other in the surface direction in the straight pipe portion is 2W [m],
surface tension of the fluid mass on the inner wall surface is $\sigma$ [N/m], and
a contact angle between the fluid mass and the inner wall surface is $\theta$ [rad],
a capillary force $f_c$ [N] generated in the fluid mass in the straight pipe portion is prescribed by

[Math 6]

$$f_c = 4(H + W)\sigma \cos \theta$$

a capillary force $f_{c.gap}$ [N] generated in the fluid mass in the first coupling portion is prescribed by

[Math 7]

$$f_{c.gap} = 4W\sigma \cos \theta$$

a capillary force $f_{c.gap.btm}$ [N] generated in the fluid mass in the second coupling portion is prescribed by

[Math 8]

$$f_{c.gap.btm} = 2W\sigma \cos \theta$$

The designing method of a vapor chamber may be configured in such a way that,

in a case where a length of the fluid mass in a direction in which the fluid mass flows is h [m],
an arrangement pitch of the straight pipe portion in a direction in which the fluid mass flows is $L_{DP}$ [m],
shearing stress generated in an inner wall surface along the thickness direction in the first micro channel is $\tau_{w.sp}$ [Pa], and
shearing stress generated in an inner wall surface along the surface direction in the first micro channel is $\tau_{w.dp}$ [Pa],
a viscous force $f_{R1}$ [N] included in the resistance force $F_R$ and generated in the fluid mass that flows in the first micro channel is prescribed by

[Math 9]

$$f_{R1} = 4\left( \frac{L_{DT}}{L_{DP}} H \tau_{w.sp} + \frac{(1+\varepsilon)}{2} W \tau_{w.dp} \right) h$$

The designing method of a vapor chamber may be configured in such a way that a resistance force that prevents a movement of the fluid mass by the capillary force includes at least one of gravity, an inertial force, and an electromagnetic force.

A manufacturing method of a vapor chamber according to a third aspect of the present disclosure is configured in such a way that

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,
in a case where a permissible amount of a bending deformation amount of the housing is $\delta_c$ [mm], a modulus of longitudinal elasticity of the housing is E [N/mm$^2$], a moment of inertia of area of the housing is I [mm$^2$], and a uniform distribution load that is a load per unit length applied to the housing by an internal pressure or an external pressure generated in the internal space is w [N/mm], the reinforcing member is provided in the internal space of the housing in such a way that an interval $L_{sp}$ [mm] between the reinforcing members adjacent to each other satisfies an equation below.

[Math 10]

$$L_{sp} < \sqrt[4]{\frac{384\delta_c EI}{5w}}$$

The manufacturing method of a vapor chamber may be configured in such a way that

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,
the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition,
the housing having a channel structure of the capillary channel based on a determined value of a designing parameter is made of the selected material, and
the selected coolant is encapsulated in the internal space of the housing.

A manufacturing method of a vapor chamber according to a fourth aspect of the present disclosure is configured in such a way that

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,
the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition,
the housing having a channel structure of the capillary channel based on a determined value of a designing parameter is made of the selected material, and
the selected coolant is encapsulated in the internal space of the housing.

A vapor chamber according to a fifth aspect of the present disclosure includes a housing having a flat plate shape and having an internal space, wherein

the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,
in a case where a permissible amount of a bending deformation amount of the housing is $\delta_c$ [mm], a modulus of longitudinal elasticity of the housing is $E$ [N/mm$^2$], a moment of inertia of area of the housing is $I$ [mm$^2$], and a uniform distribution load that is a load per unit length applied to the housing by an internal pressure or an external pressure generated in the internal space is $w$ [N/mm], an interval $L_{sp}$ [mm] between the reinforcing members adjacent to each other is prescribed in such a way as to satisfy an equation below.

[Math 11]

$$L_{sp} < \sqrt[4]{\frac{384\delta_c EI}{5w}}$$

The vapor chamber may be configured in such a way that

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,
the vapor chamber has the coolant, a material of the vapor chamber, and a channel structure of the capillary channel that satisfy all of the first condition, the second condition, and the fourth condition, or satisfy all of the first condition, the third condition, and the fourth condition.

A vapor chamber according to a sixth aspect of the present disclosure has a flat plate shape and includes a housing having a flat plate shape and having an internal space, wherein

the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,

the vapor chamber has the coolant, a material of the housing, and a channel structure of the capillary channel that satisfy all of the first condition, the second condition, and the fourth condition, or satisfy all of the first condition, the third condition, and the fourth condition.

Advantageous Effects of Invention

According to the present disclosure, deformation due to an internal pressure increase by high heat or deformation by an external force can be suppressed.

According to the present disclosure, in a channel that generates a capillary force having a two-dimensional lattice pattern provided at a uniform lattice pitch, the capillary force applied to a fluid mass of a coolant exceeds a resistance force that prevents a movement of the fluid mass, work performed by a force applied to the fluid mass is positive as a whole, and the coolant and a material of a vapor chamber is selected and a value of a designing parameter according to a channel structure of a capillary channel can also be determined in such a way that dryout is not caused in a heat receiving portion, and thus continuous heat diffusion can be performed without an influence of the resistance force on thermal performance.

Brief Description of Drawings

FIG. 1A is a side view of a vapor chamber according to an embodiment of the present disclosure;
FIG. 1B is a perspective view of the vapor chamber in FIG. 1A;
FIG. 1C is a side view of a modified example of the vapor chamber according to the embodiment of the present disclosure;
FIG. 1D is a perspective view of the vapor chamber in FIG. 1C;
FIG. 2A is a perspective view of a member constituting a heat pipe in FIGS. 1A and 1B;
FIG. 2B is a perspective view of a member constituting a heat pipe in FIGS. 1C and 1D;
FIG. 3A is a top view of a lower member;
FIG. 3B is an enlarged view of a part of an internal region of the lower member;
FIG. 3C is a top view of a modified example of the lower member;
FIG. 4A is a top view of an intermediate member;
FIG. 4B is an enlarged view of a part of a capillary channel provision region of the intermediate member;
FIG. 4C is a top view of a modified example of the intermediate member;
FIG. 5A is a schematic view illustrating an internal space of the vapor chamber when viewed from a thickness direction and a surface direction;
FIG. 5B is a schematic view illustrating an internal space of a modified example of the vapor chamber when viewed from the thickness direction and the surface direction;
FIG. 6A is a diagram illustrating an arrangement example of a capillary channel (first micro channel) provided in the lower member;
FIG. 6B is a diagram illustrating the arrangement example of the capillary channel (first micro channel);
FIG. 6C is a diagram when the capillary channel is viewed from a side surface;
FIG. 7A is a first schematic diagram illustrating a structure of the first micro channel;
FIG. 7B is a second schematic diagram illustrating the structure of the first micro channel;
FIG. 8A is a first schematic diagram illustrating a first condition and a second condition;
FIG. 8B is a second schematic diagram illustrating the first condition and the second condition;
FIG. 9 is a schematic diagram illustrating a third condition;
FIG. 10A is a first schematic diagram illustrating an inflow of heat in a heat receiving portion and a movement of a coolant;
FIG. 10B is a second schematic diagram illustrating an inflow of the heat in the heat receiving portion and a movement of the coolant;
FIG. 11A is a block diagram illustrating a hardware configuration of an information processing device that performs designing processing;
FIG. 11B is a flowchart of the designing processing;
FIG. 12 is a top view of an illumination device including the vapor chamber in FIG. 1A as a mounting substrate;
FIG. 13A is an exploded perspective view of a part of a structure on a mounting surface of the mounting substrate in the illumination device;
FIG. 13B is a cross-sectional view illustrating a connection state of one LED on the mounting substrate;
FIG. 14 is a graph that compares junction temperatures of an LED element in the vapor chamber in FIG. 1A and a copper substrate;

FIG. 15A is a side view illustrating a state where the vapor chamber is installed in a first orientation;

FIG. 15B is a side view illustrating a state where the vapor chamber is installed in a second orientation;

FIG. 15C is a side view illustrating a state where the vapor chamber is installed in a third orientation; and

FIG. 16 is a graph illustrating a comparison result of heat resistance when an orientation of the vapor chamber is changed.

Description of Embodiments

Hereinafter, embodiments of the present disclosure are described in detail with reference to drawings. The same or equivalent portion is denoted by the same reference sign in each of the drawings.

Embodiment 1

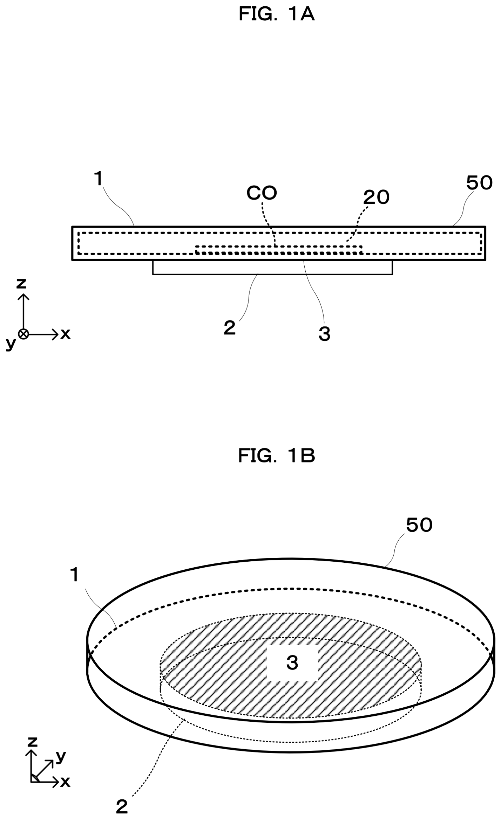

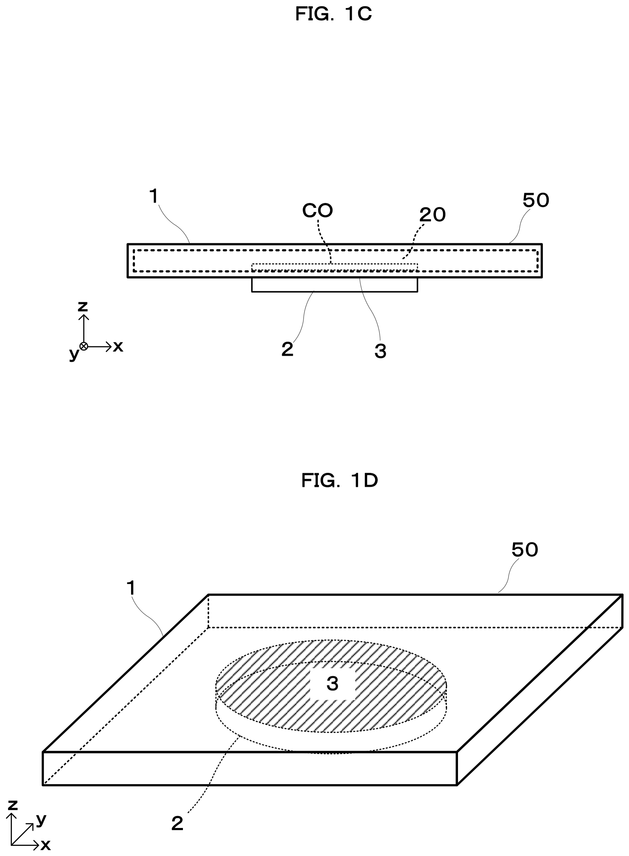

First, Embodiment 1 of the present disclosure is described. As illustrated in FIGS. 1A and 1B, a vapor chamber 1 as a heat diffusion plate according to the present embodiment is a cooling device including a housing 50 having a flat plate shape, specifically, a disk shape as a whole in which a z-axis direction is a thickness direction. A shape of the housing 50 is not limited to the disk shape, and may be, for example, a rectangle flat plate shape as illustrated in FIGS. 1C and 1D. Hereinafter, a case of the shape illustrated in FIGS. 1A and 1B and a case of the shape illustrated in FIGS. 1C and 1D both refer to the vapor chamber 1, and a member having the same function is described with the same reference sign. A material that can provide an airtightness structure is used for the housing 50. Examples of such a material include, for example, copper. A heat source body 2 having a disk shape as a cooled object being a cooling target is attached to a bottom center portion facing a -z direction of the vapor chamber 1. Note that a shape of the heat source body 2 is not limited to the disk shape, and may be, for example, a rectangular shape.

A semiconductor integrated device (IC), a large scale integrated circuit device (LSI), a central processing device (CPU), a light-emitting diode (LED), and the like are assumed as the heat source body 2. In the vapor chamber 1, the bottom center portion to which the heat source body 2 is attached is referred to as a heat receiving portion 3 that receives heat from the heat source body 2. The heat received from the heat source body 2 by the heat receiving portion 3 is transmitted to the entire vapor chamber 1, and is radiated.

As illustrated in FIG. 1A, a hermetically sealed space (internal space) 20 being decompressed is provided in the housing 50 of the vapor chamber 1. A coolant CO is encapsulated in the internal space 20. The coolant CO being liquefied is vaporized by the heat received by the heat receiving portion 3, and is diffused to the entire internal space 20. The diffused coolant CO condenses to be the coolant CO being liquefied after the heat is transmitted to an outer surface of the vapor chamber 1, and returns to the heat receiving portion 3 by a capillary force. The heat transmitted to the outer surface of the vapor chamber 1 is radiated to the outside. In this way, the vapor chamber 1 diffuses the heat to the whole by circulation of the coolant CO inside the internal space 20.

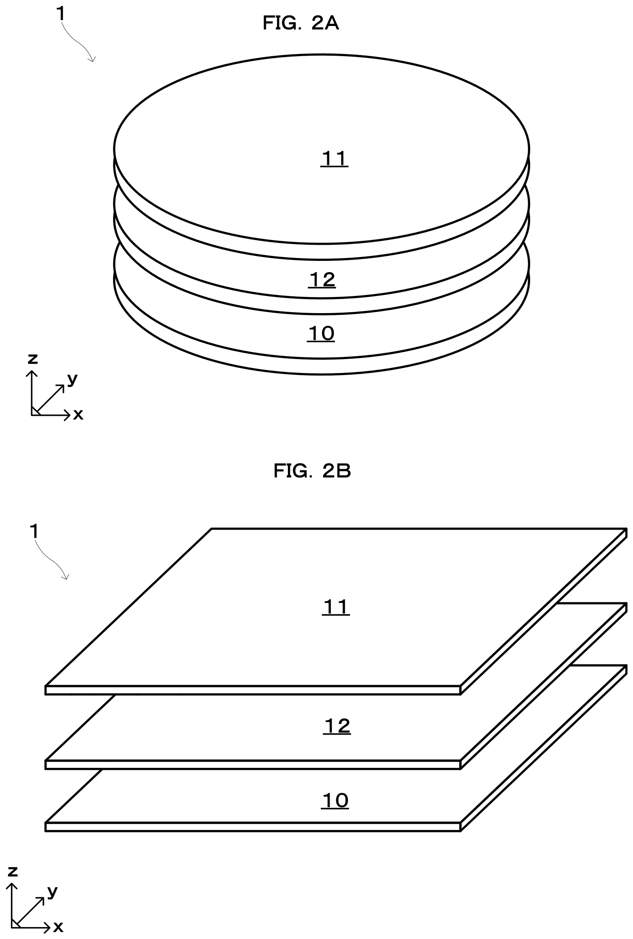

As illustrated in FIGS. 2A and 2B, the vapor chamber 1 includes a lower member 10, an upper member 11, and an intermediate member 12. The lower member 10 is a member having a disk shape. A lower surface (-z surface) of the lower member 10 constitutes a lower surface of the housing 50 of the vapor chamber 1. The heat receiving portion 3 is provided on the lower surface of the lower member 10.

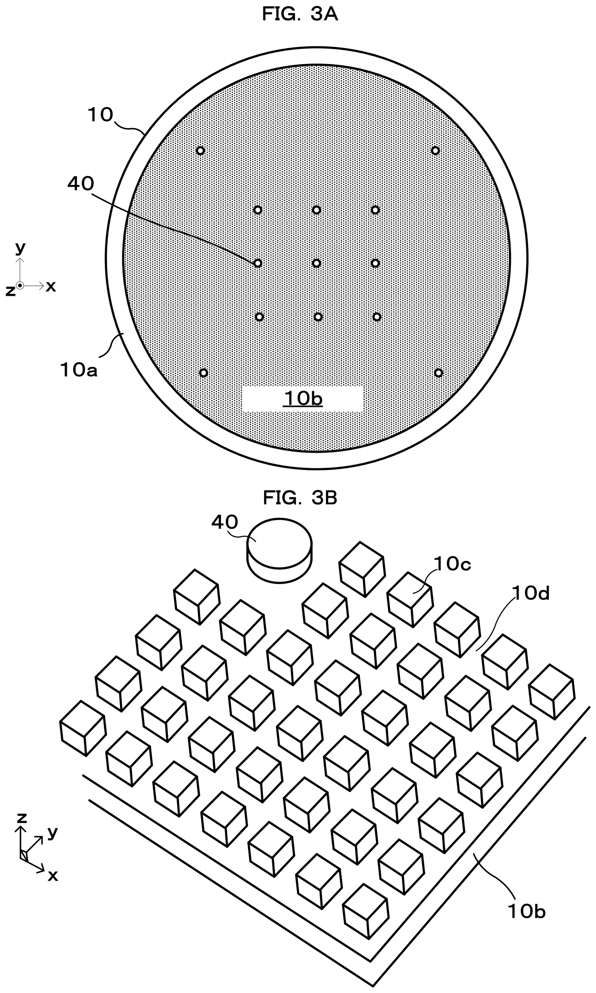

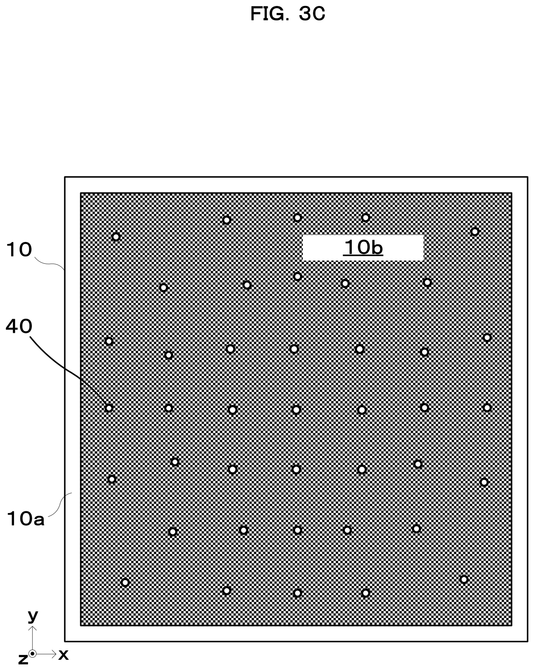

As illustrated in FIGS. 3A and 3C, an outer edge portion 10a having a frame shape provided along an outer edge of the lower member 10, and an internal region 10b inside the outer edge portion 10a are provided on an upper surface (+z surface) side of the lower member 10. The outer edge portion 10a is provided with a bonding protrusion protruding to an upper side (+z side) farther than the internal region 10b. The lower member 10 is subjected to diffusion bonding to an outer edge of a lower surface of the intermediate member 12 in the outer edge portion 10a.

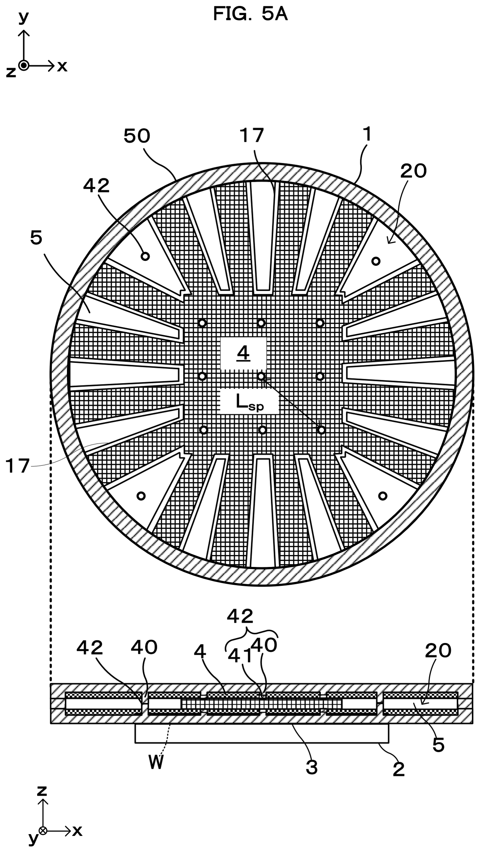

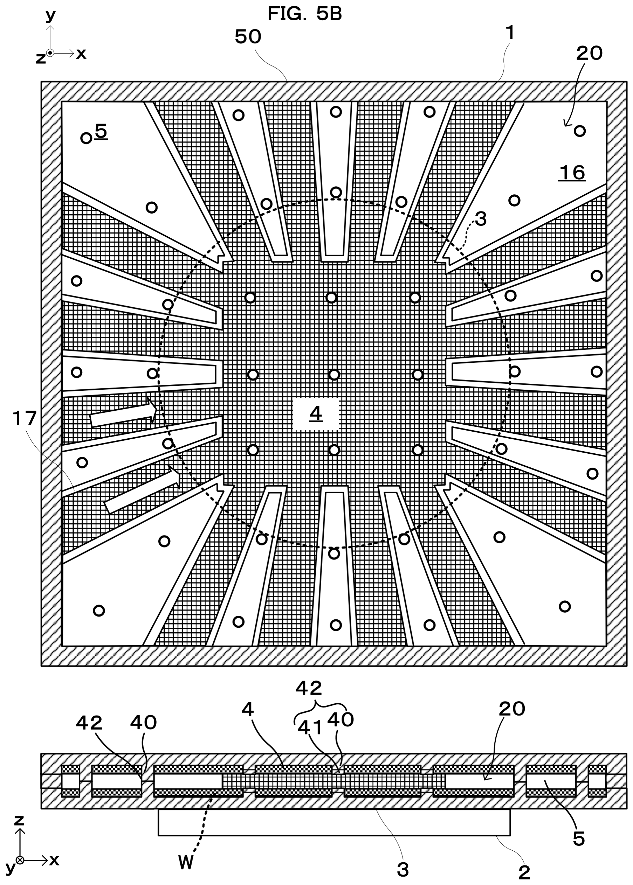

The internal region 10b of the lower member 10 constitutes a bottom surface of the internal space 20. As illustrated in FIG. 3B, a great number of dimples 10c being rectangular protrusions with four sides disposed along an x-axis direction and a y-axis direction when viewed from the z-axis direction is provided in the internal region 10b. The dimples 10c are two-dimensionally arranged at a predetermined pitch in the x-axis direction and the y-axis direction. A groove portion 10d extending in the x-axis direction and the y-axis direction is provided between the dimples 10c. The groove portion 10d is a capillary channel 4 (see FIG. 5) through which the coolant CO being liquefied passes.

As illustrated in FIGS. 3A, 3C, and 3B, a plurality of bonding protrusions 40 having a columnar shape is provided in a surface direction in the internal region 10b of the lower member 10.

The upper member 11 is a member having a rectangular flat plate shape, and is a member having the same shape and size as those of the lower member 10 illustrated in FIGS. 2A and 2B. A lower surface (a surface on a -z side) of the upper member 11 constitutes a ceiling of the internal space 20 of the vapor chamber 1. The lower surface (-z surface) of the upper member 11 is also provided with the outer edge portion 10a and the internal region 10b, and a two-dimensional arrangement of the dimples 10c arranged at the predetermined pitch in the x-axis direction and the y-axis direction, and the groove portion 10d having a two-dimensional lattice pattern extending in the x-axis direction and the y-axis direction are provided in the internal region 10b. Furthermore, in the internal region 10b of the upper member 11, the plurality of bonding protrusions 40 having the columnar shape is also provided in a position facing the bonding protrusions 40 of the lower member 10.

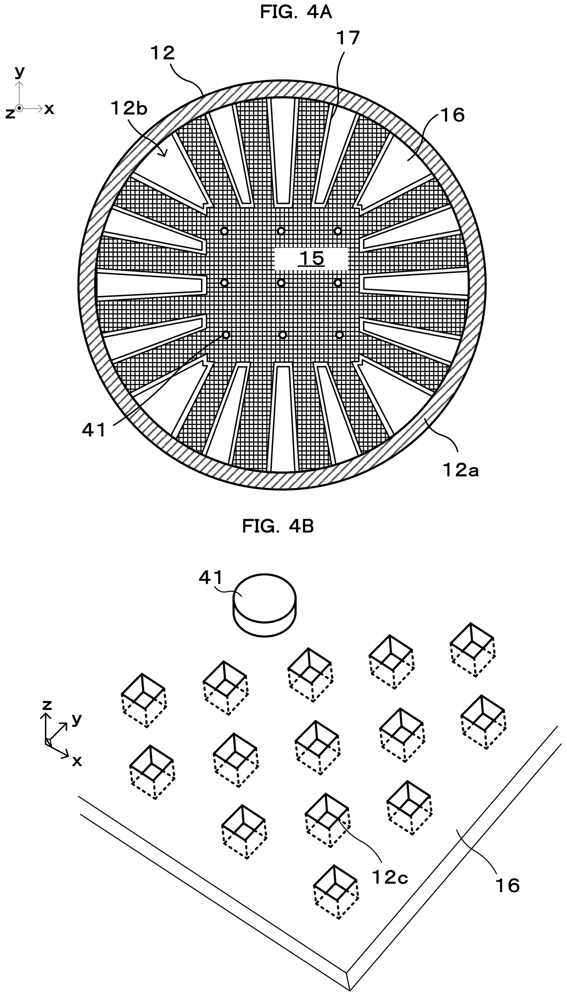

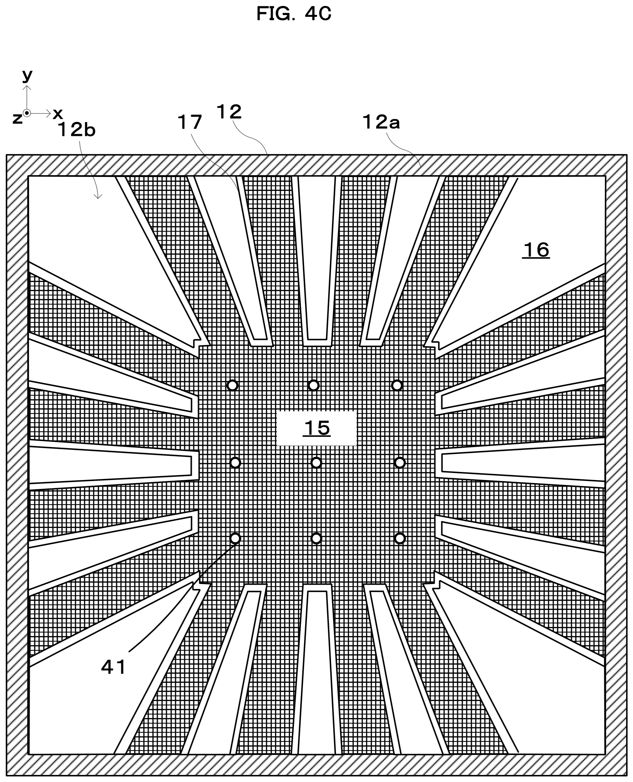

As illustrated in FIGS. 4A and 4C, an outer edge portion 12a having a rectangular frame shape provided along an outer edge of the intermediate member 12, and an internal region 12b inside the outer edge portion 10a are provided in the intermediate member 12. The outer edge portion 12a is subjected to diffusion bonding to the outer edge portion 10a of the lower member 10 on a lower surface side of the outer edge portion 12a, and is subjected to diffusion bonding to the outer edge portion 10a of the upper member 11 on an upper surface side of the outer edge portion 12a.

As illustrated in FIGS. 4A and 4C, the internal region 12b is divided into a capillary channel provision region 15 and a vapor channel provision region 16. The capillary channel provision region 15 is disposed at the center of the internal region 12b, and a plurality of the capillary channel provision regions 15 also radially extends from the center to a periphery of the internal region 12b, that is, the outer edge portion 12a. The vapor channel provision region 16 is disposed between the radially extending capillary channel provision regions 15. The capillary channel provision region 15 and the vapor channel provision region 16 are alternately arranged along a circumferential direction of a circle centered on the center of the internal region 12b.

A bonding protrusion 17 bonded to the lower member 10 and the upper member 11 is provided between the capillary channel provision region 15 and the vapor channel provision region 16, and inside the capillary channel provision region 15. By the bonding protrusion 17, the vapor chamber 1 can have strength against an increase in an internal pressure caused by an internal temperature increase due to heat reception from the heat source body 2 and an increase in an environmental temperature, or strength against an increase in an external pressure by an external force. Furthermore, by the bonding protrusion 17, the capillary channel provision region 15 and the vapor channel provision region 16 can be divided.

As illustrated in FIG. 4B, a plurality of through holes 12c having a rectangular shape and constituting the capillary channel is two-dimensionally arranged at a predetermined pitch in the x-axis direction and the y-axis direction in the capillary channel provision region 15. As illustrated in FIGS. 4A and 4C, in the vapor channel provision region 16, a plate is bored, and an opening larger than the capillary channel provision region 15 is provided.

Further, as illustrated in FIGS. 4A and 4C, a plurality of bonding protrusions 41 having a columnar shape is provided in the surface direction in the capillary channel provision region 15. The bonding protrusion 41 is provided in a position abutting the bonding protrusion 40 of the lower member 10 and the upper member 11. Note that, in the lower member 10 and the upper member 11, the bonding protrusion 40 provided in a position corresponding to the vapor channel provision region 16 of the intermediate member 12 is provided higher than the bonding protrusion 40 provided in a position corresponding to the capillary channel provision region 15.

Returning to FIGS. 2A and 2B, the lower member 10, the intermediate member 12, and the upper member 11 are bonded in this order along the z-axis direction, and the housing 50 of the vapor chamber 1 is provided as illustrated in FIGS. 5A and 5B. In this case, in the capillary channel provision region 15 of the intermediate member 12, the bonding protrusion 40 of the lower member 10 and the bonding protrusion 41 of the intermediate member 12 are subjected to diffusion bonding by pressing, and the bonding protrusion 40 of the lower member 10 and the bonding protrusion 41 of the intermediate member 12 are also subjected to diffusion bonding by pressing, and a spacer 42 is provided. At this time, the spacer 42 is provided without a gap between the lower member 10 and the intermediate member 12 and between the upper member 11 and the intermediate member 12. Further, in the vapor channel provision region 16 of the intermediate member 12, the bonding protrusion 40 of the lower member 10 and the bonding protrusion 40 of the upper member 11 are subjected to diffusion bonding, and the spacer 42 is provided. The spacer 42 is provided for a purpose of reinforcing the housing 50 in the thickness direction in such a way that the internal space 20 is not crushed and not expanded, and a plurality of the spacers 42 is provided in the surface direction of the housing 50. In the present embodiment, the spacer 42 and the bonding protrusion 17 correspond to a reinforcing member.

Reinforcing Member

Herein, a case where the vapor chamber 1 is used as a mounting substrate on which an electronic part is mounted is considered. In order to achieve appropriate heat transfer efficiency in the vapor chamber 1, a value of a Biot number defined in the following equation needs to be appropriately set.
[Math 12]

$$Bi = \frac{hL}{k} \qquad (1)$$

Herein, Bi [-] is the Biot number, and is a dimensionless number representing a ratio between heat transfer resistance inside the housing 50 and heat transfer resistance when heat is radiated from the housing 50 to the outside of a system. Further, h [$W \cdot m^{-2} K^{-1}$] is a heat transfer coefficient when the heat is radiated from the housing 50 to the outside of the system. L [m] is a representative length related to a size of the housing 50, and k [$W \cdot m^{-1} \cdot K^{-1}$] is thermal conductivity of the housing 50. Note that, in a case where a heat transfer path when the heat is radiated from the housing 50 to the outside of the system is constituted by a plurality of members, an overall heat transfer coefficient may be appropriately used as the heat transfer coefficient.

When the Biot number Bi [-] is great, temperature unevenness increases in a surface of the housing 50, and, conversely, when the Biot number Bi [-] is small, the temperature unevenness of the housing 50 is reduced. When the temperature unevenness is great in the surface of the housing 50, thermal stress generated in the surface becomes uneven. The unevenness of the thermal stress generated in the surface is caused by unevenness of a deformation amount due to heat expansion in the surface of the housing 50.

When the deformation amount in the surface of the housing 50 becomes uneven, a distribution of an external force such as shearing stress and tensile stress acting on a wiring line pattern and the like also becomes uneven, and, when this continues to repeatedly act due to an increase and a decrease in a heat generation amount, there is a risk that a circuit component may be broken, and thus the temperature unevenness in the surface of the housing 50 needs to be suppressed. In order to suppress the temperature unevenness in the surface of the housing 50 to an appropriate value, a value of the Biot number Bi [-] needs to be reduced. From Equation (1) described above, in order to reduce the Biot number Bi [-], the heat transfer coefficient when the heat is radiated to the outside of the system, or the housing 50 may be reduced, or a value of the thermal conductivity of the housing 50 may be increased.

The size of the housing 50 is prescribed by a mounting area needed for a part mounted on the housing 50 now. The mounting area needed for the part mounted on the housing 50 is determined by determining action of the housing 50 and a component for achieving the action. In other words, while keeping the action of the housing 50, a size of a substrate cannot be reduced in order to reduce the Biot number Bi [-].

On the other hand, in a case where an amount of the heat generated from the housing 50 is $Q_{out}$ [W], the following equation is acquired by the Newton's law of cooling.

[Math 13]

$$Q_{out} = \int_{A_S} U_S(T_s - T_a) dA \qquad (2)$$

Herein, $A_s$ [$m^2$] is a substrate surface area, and $U_s$ [$W \cdot m^{-2} \cdot K^{-1}$] is an overall heat transfer coefficient with reference to a rear surface area when the heat is radiated to the outside of the system from a surface (hereinafter referred to as a rear surface of the housing 50) on an opposite side to a part mounting surface of the housing 50. Further, $T_s$ [K] is a rear surface temperature, and $T_a$ [K] is an environmental temperature.

Herein, when an average value $\langle U_s \rangle$ in the surface of the housing 50 is used as $U_s$, Equation (2) is transformed as follows.

[Math 14]

$$Q_{out} = \langle U_s \rangle A_S (\langle T_s \rangle - T_a)$$

Therefore, the following equation is derived.

[Math 15]

$$\langle T_s \rangle = \frac{Q_{out}}{\langle U_s \rangle A_S} + T_a \qquad (3)$$

Herein, $\langle T_s \rangle$ [K] is an average temperature of the rear surface.

Herein, $Q_{out}$ is determined by power input to the part mounted on the housing 50, and operation efficiency of the part. Therefore, in a case where the overall heat transfer coefficient h [$W \cdot m^{-2} K^{-1}$] is reduced in order to reduce the Biot number Bi [-] when the housing 50 performs a desired motion, the rear surface temperature of the housing 50 increases. When the rear surface temperature of the housing 50 increases, a temperature of the part mounted on the housing 50 increases, and this increase causes a decrease in the operation efficiency and a short life, and thus it is unsuitable to reduce the overall heat transfer coefficient h in order to reduce the Biot number Bi [-]. In other words, in order to reduce the temperature unevenness in the surface of the housing 50 when equipment having a predetermined size achieves predetermined action, increasing the thermal conductivity of the equipment is the only one choice.

The vapor chamber 1 according to the present embodiment is the heat diffusion plate having higher thermal conductivity than that of a copper plate. The vapor chamber 1 has heat resistance in a high temperature process such as surface mounting by reflow of an electronic part, and can suppress the temperature unevenness in the surface of the housing 50 that leads to a problem of reliability in electronic part mounting. Further, the vapor chamber 1 can suppress a change in thermal performance by an installation posture, and can suppress generation of an uneven temperature distribution of the coolant CO.

The vapor chamber 1 according to the present embodiment has the heat resistance in the high temperature process such as surface mounting. Specifically, in the vapor chamber 1, a bending deformation amount $\delta$max [mm] of the housing 50 is designed in such a way as to satisfy the following relationship.
[Math 16]

$$\delta_{max} < \delta_c \qquad (4)$$

Herein, $\delta_c$ [mm] is a permissible amount of bending deformation in the surface of the vapor chamber 1.

The spacer 42 is provided inside the vapor chamber 1 in order to suppress deformation by an internal pressure or an external force. Herein, in a case where a value in a portion having a maximum interval between the adjacent spacers 42 provided inside the vapor chamber 1 is $L_{sp.max}$ [mm], $d_{max}$ is given by the following equation.
[Math 17]

$$\delta_{max} = \frac{5w L_{sp.max}^4}{384 EI} \qquad (5)$$

Herein, w [N/mm] is a uniform distribution load by an internal pressure increase or an external pressure increase. Further, E [N/mm$^2$] is a modulus of longitudinal elasticity of a member that constitutes the housing 50 of the vapor chamber 1. Further, I [mm$^4$] is a moment of inertia of area of the housing 50.

In a case of the internal pressure increase, a value of the uniform distribution load w [N/mm] is calculated by a saturated vapor pressure $P_{s.ves.vc}$ [Pa] of the coolant at an internal temperature $T_{vc}$ [K] of the vapor chamber 1 in the high temperature process. Note that $P_{s.vc}$ [Pa] can be calculated by, for example, the Antoine equation with regard to the coolant. Further, when the coolant CO is a mixed substance, $P_{s.vc}$ [Pa] can be calculated by, for example, the Wilson equation. Further, various external forces causing the external pressure increase are assumed, and the uniform distribution load w [N/mm] can be estimated based on magnitude of a force that presses the vapor chamber 1 in a step of constituting the electronic part by using the vapor chamber 1 as the mounting substrate, for example. For example, the uniform distribution load w [N/mm] can be estimated based on a pressing force that pushes the vapor chamber 1 by a pressing machine in a step of laminating the vapor chamber 1 and an insulating substrate.

In this way, a condition that an interval $L_{sp}$ [mm] between the spacers 42 and the bonding protrusions 17 adjacent to each other in the vapor chamber 1 according to the present embodiment satisfies the following equation is set.
[Math 18]

$$L_{sp} < \sqrt[4]{\frac{384 \delta_c EI}{5w}} \qquad (6)$$

Note that a right side of Equation (6) described above is set as the maximum interval $L_{sp.max}$ [mm]. As illustrated in FIGS. 5A and 5B, the spacer 42 is provided in a portion in which an interval between the bonding protrusions 17 is equal to or more than $L_{sp.max}$ [mm], and thus Equation (6) described above is satisfied in the vapor chamber 1.

From Equation (6) described above, a maximum deformation amount is smaller with a smaller $L_{sp}$ [mm], but the spacer 42 is a portion bonded in the thickness direction, and thus the coolant CO cannot flow through the portion. Thus, in the vapor chamber 1 according to the present embodiment, the capillary channel 4 is designed in such a way as to satisfy Conditions 1 to 4 for achieving an appropriate amount of coolant circulation.

The internal space 20 is provided in the housing 50, and the heat receiving portion 3 is provided in a portion bonded to the heat source body 2. In the internal space 20, the capillary channel 4 and a vapor channel 5 are provided, and the coolant CO is encapsulated. In a state where the heat is not received, in accordance with the saturated vapor pressure of the coolant CO at a temperature at which the vapor chamber 1 is installed, a part of the coolant CO as liquid inside the capillary channel 4 including the heat receiving portion 3, and the rest of the coolant CO as gas inside the vapor channel 5 coexist while maintaining an equilibrium state.

When the heat is received from the heat source body 2 by the heat receiving portion 3, the coolant CO is vaporized. The vapor channel 5 moves the coolant CO vaporized in the heat receiving portion 3 in an outer edge direction when viewed from the z-axis direction. The sent vaporized coolant CO radiates the heat to the housing 50, gradually condenses, liquefies, and enters the capillary channel 4. The capillary channel 4 sends the coolant CO liquefied by the heat radiation to the heat receiving portion 3 by the capillary force.

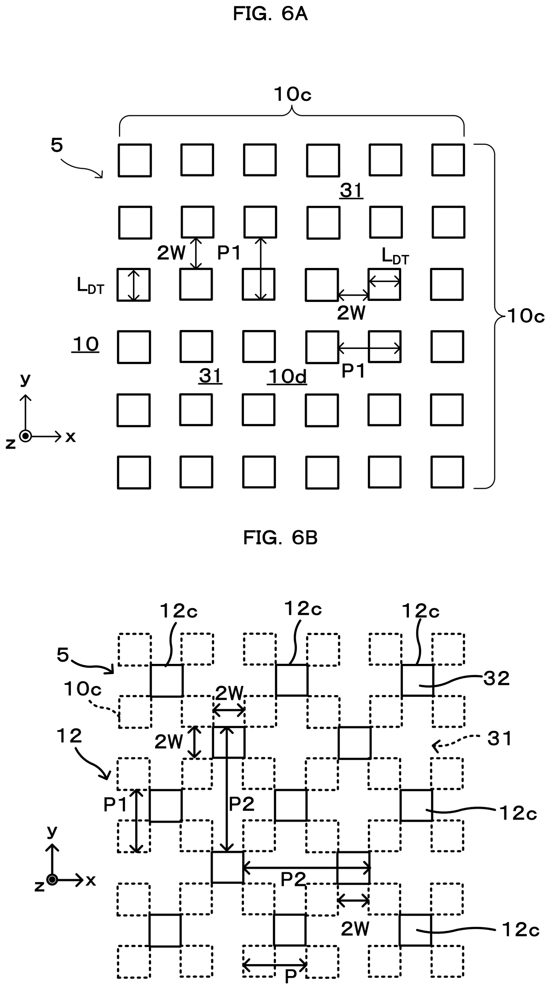

As illustrated in FIG. 6A, a width of the dimple 10c on the internal region 10b of the lower member 10 in the x-axis direction and the y-axis direction is set as $L_{DT}$ [m]. Further, a width of the groove portion 10d is set as 2W [m]. The groove portion 10d is assumed to be arranged at a lattice pitch P1 [m] in the x-axis direction and the y-axis direction. A micro channel provided by the groove portion 10d is a first micro channel 31. The first micro channel 31 is a channel having the two-dimensional lattice pattern provided at the uniform lattice pitch P1 along the surface direction of the vapor chamber 1.

As illustrated in FIG. 6B, the through hole 12c of the intermediate member 12 has a width of 2W in the x-axis direction and the y-axis direction, and is arranged at an arrangement pitch P2 [m] in the x-axis direction and the y-axis direction. The through hole 12c is disposed at a lattice point at which lines of the groove portion 10d of the lower member 10 and the upper member 11 in the x-axis direction and the y-axis direction intersect each other. In FIG. 6B, the arrangement pitch P2 of the through hole 12c in the x-axis direction and the y-axis direction is twice the lattice pitch P1 of a lattice point of the groove portion 10d, which is not limited thereto. In the present embodiment, the lattice pitch P1 and the arrangement pitch P2 can be adjusted by a designing method according to the present embodiment.

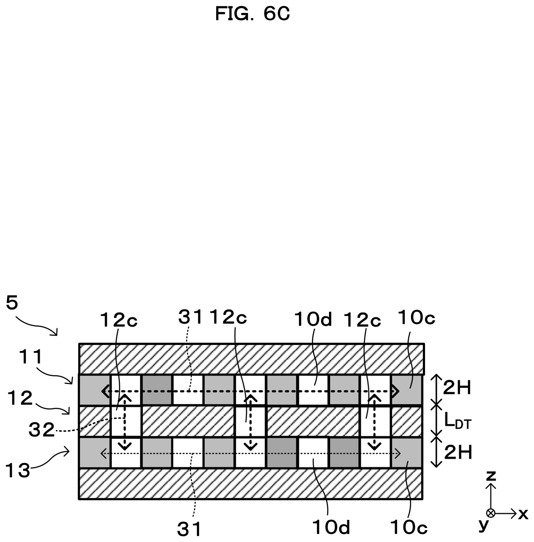

As illustrated in FIG. 6C, a height of the dimple 10c is 2H. Further, a depth of a hole of the through hole 12c is $L_{DT}$. The depth of the hole of the through hole 12c is the same as a thickness of the intermediate member 12, and can be changed to any value. The groove portion 10d of the lower member 10 and the upper member 11, and the through hole 12c of the intermediate member 12 communicate with each other and extend in the thickness direction of the vapor chamber 1, and a micro channel two-dimensionally arranged at the arrangement pitch P2 along the surface direction of the vapor chamber 1, that is, the x-axis direction and the y-axis direction is provided. The micro channel is a second micro channel 32. In other words, the capillary channel 4 includes the second micro channel 32.

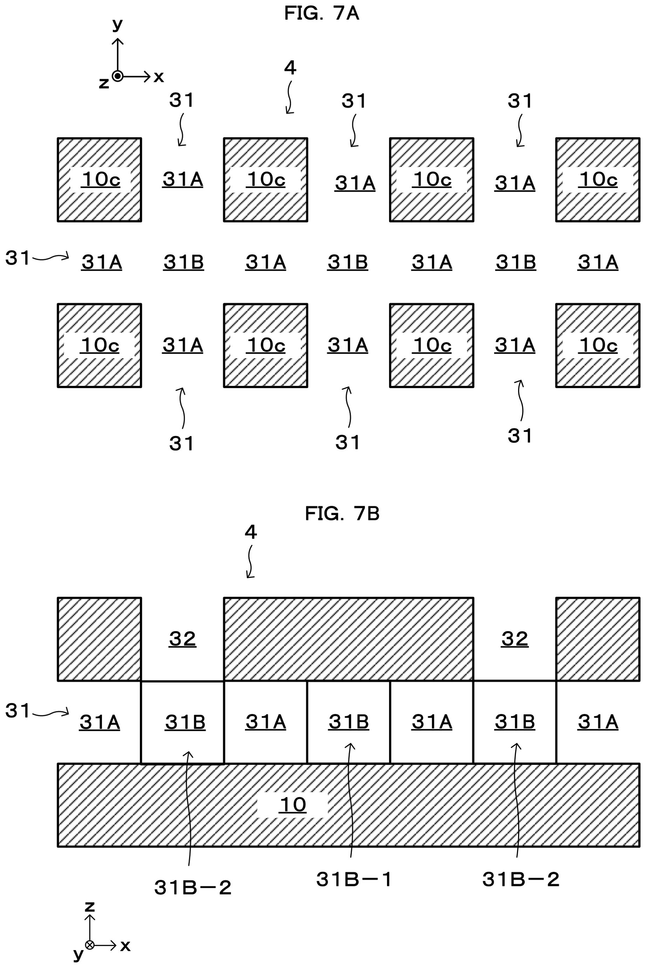

As illustrated in FIG. 7A, the first micro channel 31 includes a straight pipe portion 31A and a coupling portion 31B. The straight pipe portion 31A is a portion having a pipe shape that extends in the x-axis direction or the y-axis direction, and sends a fluid mass (hereinafter simply referred to as a fluid mass CA) of the coolant CO in one direction. The straight pipe portion 31A includes four inner wall surfaces that constitute a rectangular cross section orthogonal to a direction in which the fluid mass (hereinafter simply referred to as the fluid mass CA) of the liquefied coolant CO flows, and generates the capillary force by the inner wall surfaces. The coupling portion 31B is disposed at the lattice point of the first micro channel 31, and couples the straight pipe portions 31A at the lattice point. The first micro channel 31 is constituted by alternately disposing the straight pipe portion 31A and the coupling portion 31B along the x-axis direction and the y-axis direction.

As illustrated in FIG. 7B, the second micro channel 32 is arranged at the arrangement pitch P2, and is coupled to the coupling portion 31B of the first micro channel 31. As illustrated in FIG. 7B, the coupling portion 31B includes a first coupling portion 31B-1 that is not coupled to the second micro channel 32, and a second coupling portion 31B-2 coupled to the second micro channel 32. In the present embodiment, the arrangement pitch P2 of the second micro channel 32 is twice the lattice pitch P1 of the coupling portion 31B, and thus one of two continuous coupling portions 31B is the second coupling portion 31B-2.

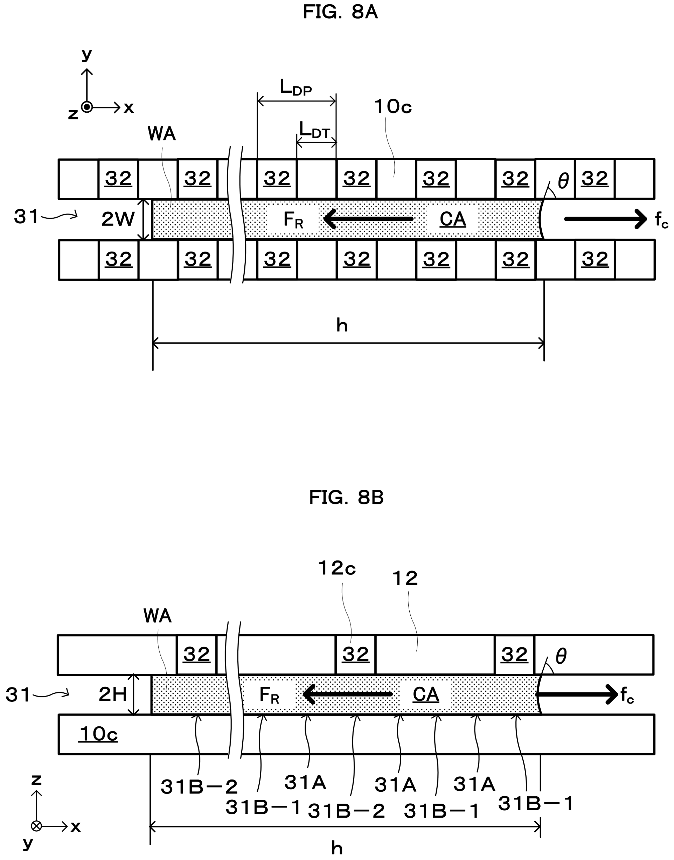

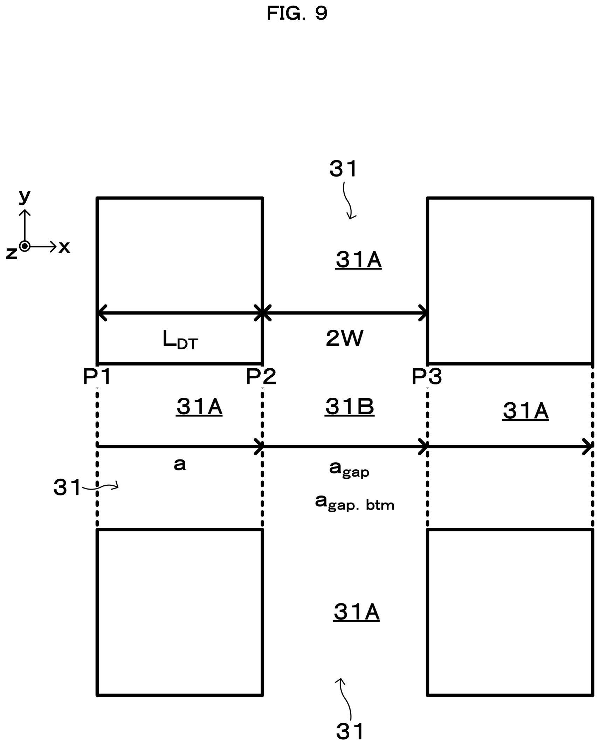

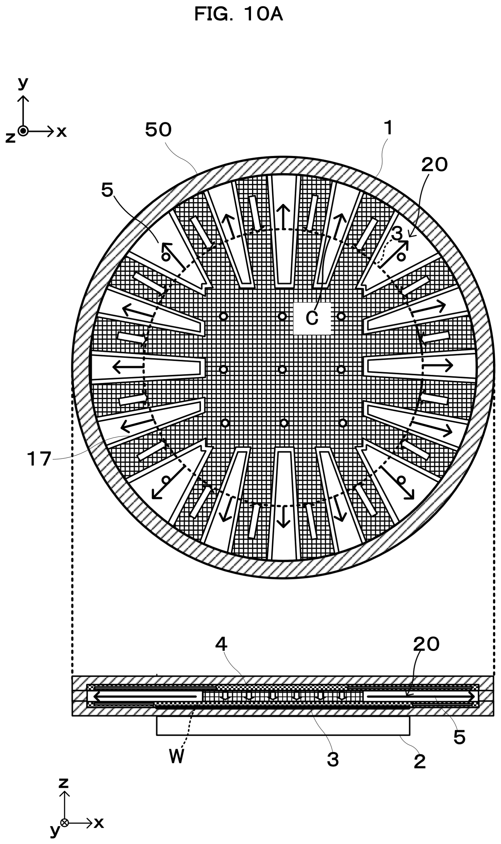

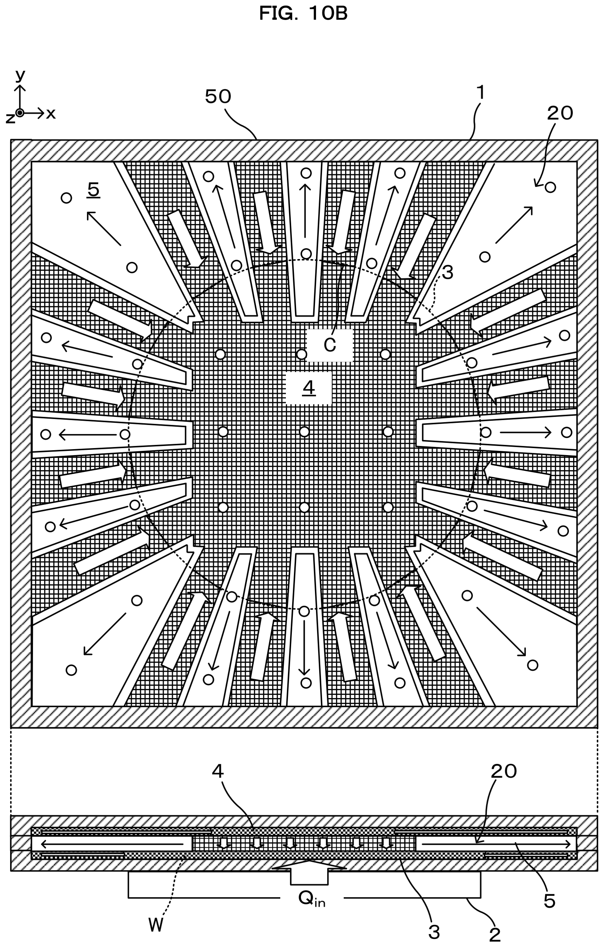

In the designing method according to the present embodiment, the capillary channel 4 of the vapor chamber 1 having the configuration as described above is designed. In the designing method, a first condition, a second condition, a third condition, and a fourth condition are prescribed as a condition that needs to be satisfied by the capillary channel 4. The first condition is that acceleration a generated in the fluid mass CA by a capillary force $f_c$ [N] applied to the fluid mass CA in the straight pipe portion 31A is positive (see FIGS. 8A and 8B). The second condition is that accelerations $a_{gap}$ and $a_{gap.btm}$ generated in the fluid mass CA by the capillary force $f_c$ [N] applied to the fluid mass CA in the coupling portion 31B are positive. The third condition is that a sum of work performed by a force applied to the fluid mass CA in the straight pipe portion 31A and work performed by a force applied to the fluid mass CA in the coupling portion 31B is positive in the first micro channel 31 (see FIG. 9). The fourth condition is that a total amount of evaporation latent heat per unit time of the fluid mass CA returning from the capillary channel 4 to the heat receiving portion 3 exceeds an input heat amount per unit time from the heat source body 2 to the heat receiving portion 3 (see FIGS. 10A and 10B). Hereinafter, the first condition to the fourth condition are described in detail.

[First Condition]

The first condition is that the acceleration a generated in the fluid mass CA by the capillary force $f_c$ [N] applied to the fluid mass CA in the straight pipe portion 31A is positive. As illustrated in FIGS. 8A and 8B, in a case where a capillary force generated in the straight pipe portion 31A is $f_c$ [N], and a resistance force that prevents a movement of the fluid mass CA by the capillary force $f_c$ [N] is $F_R$ [N], the following equation is required to be satisfied in the capillary channel 4.

[Math 19]

$$f_c > F_R \qquad (7)$$

For example, in the first micro channel 31, for example, a density of the continuously moving fluid mass CA illustrated in FIGS. 8A and 8B is set as $\rho$ [kg/m$^3$], and a volume of the fluid mass CA is set as V [m$^3$]. Further, in a case where the acceleration generated in the fluid mass CA by the capillary force $f_c$ [N] in the straight pipe portion 31A is a [m/s$^2$], an equation of motion that satisfies the first condition as the entire fluid mass CA is given by the following equation.
[Math 20]

$$\rho V a = f_c - F_R \qquad (8)$$

From Equation (7) and Equation (8) described above, the following equation is acquired.
[Math 21]

$$a = \frac{f_c - F_R}{\rho V} > 0 \qquad (9)$$

The first micro channel 31 extending in the surface direction of the vapor chamber 1 is characterized in that the fluid mass CA moving inside the first micro channel 31 satisfies Equation (9). The Equation (9) is a condition equation representing the first condition. The fluid mass CA can move in the straight pipe portion 31A by satisfying the condition equation.

Note that the resistance force $F_R$ [N] is a sum of various resistance forces $f_{Ri}$ [N] acting on the coolant CO, and is given by the following equation.
[Math 22]

$$F_R = \sum_{i=1}^{n} f_{Ri} \qquad (10)$$

n is a positive integer, and represents the number of kinds of the assumed resistance force $F_R$ [N]. The resistance force $F_R$ [N] includes a viscous force $f_{R1}$ [N] generated by the inner wall surface of the channel. Further, the resistance force $F_R$ [N] also includes gravity $f_{R2}$ [N] when the coolant CO moves vertically upward on the earth. Further, when the vapor chamber 1 performs an acceleration motion, the resistance force $F_R$ [N] also includes an inertial force $f_{R3}$ [N] generated by the acceleration motion. When the coolant CO is an electromagnetic fluid, and the vapor chamber 1 is placed in a magnetic field, the resistance force $F_R$ [N] also includes an electromagnetic force (Lorentz force) generated in the electromagnetic fluid. In other words, the resistance force $F_R$ [N] that prevents the movement of the fluid mass CA by the capillary force includes at least one of the viscous force $f_{R1}$, the gravity $f_{R2}$ [N], the inertial force $f_{R3}$ [N], and the electromagnetic force.

[Capillary Force $f_c$]

As illustrated in FIGS. 8A and 8B, when the straight pipe portion 31A has the rectangular cross section orthogonal to the direction in which the fluid mass CA flows, in a case where a distance between the inner wall surfaces facing each other in the thickness direction in the straight pipe portion 31A is 2H [m], a distance between the inner wall surfaces facing each other in the surface direction of the vapor chamber 1 in the straight pipe portion 31A is 2W [m], surface tension of the fluid mass CA on the inner wall surface is $\sigma$ [N/m], and a contact angle between the fluid mass CA and the inner wall surface is $\theta$ [rad], the capillary force $f_c$ [N] is prescribed by the following equation.
[Math 23]

$$f_c = 4(H + W)\sigma \cos\theta \qquad (11)$$

[Viscous Force $f_{R1}$]

Meanwhile, $f_{R1}$ [N] is set as a viscous force generated due to shearing stress received from the inner wall surface by the movement of the fluid mass CA. In this case, a length of the fluid mass CA in a direction in which the first micro channel 31 extends is set as h [m], a length of the straight pipe portion 31A in a direction in which the fluid mass CAg flows is set as $L_{DT}$, and an arrangement pitch of the straight pipe portion 31A in the direction in which the fluid mass CA flows is set as $L_{DP}$. Shearing stress generated in the inner wall surface (see FIG. 8A) along the thickness direction of the vapor chamber 1 is set as $\tau_{w.sp}$ [Pa], and shearing stress generated in the inner wall surface (see FIG. 8B) along the surface direction of the vapor chamber 1 is set as $\tau_{w.dp}$ [Pa]. Further, a proportion of the number of the first coupling portions 31B-1 that are not coupled to the second micro channel 32 to the number of the coupling portions 31B in which the fluid mass CA is present is set as $\varepsilon$. When all of the coupling portions 31B are coupled to the second micro channel, $\varepsilon$ is 0, and, when all of the coupling portions 31B are not coupled to the second micro channel, $\varepsilon$ is 1.

In a case where a viscous force generated in the entire fluid mass CA is $f_{R1}$ [N], $f_{R1}$ [N] is represented by the following equation.

[Math 24]

$$f_{R1} = 4\left(\frac{L_{DT}}{L_{DP}} H \tau_{w.sp} + \frac{(1+\varepsilon)}{2} W \tau_{w.dp}\right) h \qquad (12)$$

Note that h can be set to any value, but the worst condition can be a condition that h is a maximum length from the heat receiving portion 3 to an outer side of the internal space 20.

If the resistance force $F_R$ [N] received by the fluid mass CA is only the viscous force $f_{R1}$ [N], Equation (9) being the first condition that needs to be satisfied by the first micro channel 31 is converted as follows.

[Math 25]

$$a = \frac{f_c - f_{R1}}{\rho V} = \frac{1}{4\rho h H W}\left(4(H+W)\sigma \cos\theta - 4\left(\frac{L_{DT}}{L_{DP}} H \tau_{w.sp} + \frac{(1+\varepsilon)}{2} W \tau_{w.dp}\right) h\right) =$$

$$\left(\frac{1}{\rho H W}\right)\left(\frac{(H+W)\sigma \cos\theta}{h} - \left(\frac{L_{DT}}{L_{DP}} H \tau_{w.sp} + \frac{(1+\varepsilon)}{2} W \tau_{w.dp}\right)\right) > 0 \qquad (13)$$

[Gravity $f_{R2}$]

Further, when a movement direction of the fluid mass CA is not horizontal on the earth, the gravity $f_{R2}$ [N] has an influence on a motion of the fluid mass CA according to an elevation angle of the movement direction of the fluid mass CA. Particularly, a case where a direction of the gravity $f_{R2}$ [N] is a direction against the motion of the fluid mass CA and the influence is maximum is a case where the fluid mass CA moves vertically upward. In this case, a condition that needs to be satisfied by the first micro channel 31 in order to move the fluid mass CA vertically upward and achieve circulation of the coolant CO is represented by the following equation.

[Math 26]

$$a = \frac{f_c - (f_{R1} + f_{R2})}{\rho V}$$

$$= \frac{1}{4\rho h H W}\left(4(H+W)\sigma \cos\theta - 4\left(\frac{L_{DT}}{L_{DP}} H \tau_{w.sp} + \frac{(1+\varepsilon)}{2} W \tau_{w.dp}\right) h\right.$$

$$\left. - 4\rho h H W g\right)$$

$$= \left(\frac{1}{\rho H W}\right)\left(\frac{(H+W)\sigma \cos\theta}{h} - \left(\frac{L_{DT}}{L_{DP}} H \tau_{w.sp} + \frac{(1+\varepsilon)}{2} W \tau_{w.dp}\right)\right) - g$$

$$> 0 \qquad (14)$$

If equipment in which the vapor chamber 1 is installed performs a motion at acceleration $a_{vc}$ [m/s$^2$], the resistance force $F_R$ [N] applied to the fluid mass CA needs to include the inertial force $f_{R3}$ [N]. A case where the inertial force $f_{R3}$ [N] is maximum is a case where the fluid mass CA performs the acceleration motion as the entire vapor chamber 1 in the movement direction of the fluid mass CA. Therefore, when the gravity $f_{R2}$ [N] and the inertial force $f_{R3}$ [N] are generated, a condition equation of the first condition that needs to be satisfied by the first micro channel 31 in order to achieve circulation of the coolant CO is the following equation.

[Math 27]

$$a = \frac{f_c - (f_{R1} + f_{R2} + f_{R3})}{\rho V}$$

$$= \frac{1}{4\rho h H W}\left\{4(H+W)\sigma\cos\theta - 4\left(\frac{L_{DT}}{L_{DP}}H\tau_{w.sp} + \frac{(1+\varepsilon)}{2}W\tau_{w.dp}\right)h\right.$$

$$\left. - 4\rho h H W(g + a_{vc})\right\}$$

$$= \left(\frac{1}{\rho H W}\right)\left(\frac{(H+W)\sigma\cos\theta}{h} - \left(\frac{L_{DT}}{L_{DP}}H\tau_{w.sp} + \frac{(1+\varepsilon)}{2}W\tau_{w.dp}\right)\right)$$

$$- (g + a_{vc}) > 0 \qquad (15)$$

Similarly, the electromagnetic force $f_{R4}$ [N] can also be added as the resistance force $F_R$ [N] to the equation described above.

[Second Condition]

The second condition is that a capillary force $f_{c.gap}$ [N] applied to the fluid mass CA in the coupling portion 31B exceeds the resistance force $F_R$ including at least one of the viscous force $f_{R1}$ [N], the gravity $f_{R2}$ [N], the inertial force $f_{R3}$ [N], and the electromagnetic force $f_{R4}$ [N] that prevent the movement of the fluid mass CA. In the fluid mass CA illustrated in FIGS. 8A and 8B, the capillary force is generated not only in the straight pipe portion 31A but also in the coupling portion 31B. As described above, the first coupling portion 31B-1 that is not coupled to the second micro channel 32, and the second coupling portion 31B-2 coupled to the second micro channel 32 are present in the coupling portion 31B. The inner wall surface is not present in the coupling portion 31B on both sides in the surface direction, but the inner wall surface is present in the thickness direction in the first coupling portion 31B-1 that is not coupled to the second micro channel 32. When the capillary force in this case is set as $f_{c.gap}$ [N], $f_{c.gap}$ [N] is as follows.

[Math 28]

$$f_{c.gap} = 4W\sigma\cos\theta \qquad (16)$$

The fluid mass CA is assumed to move in a horizontal direction. In a case where acceleration generated in the fluid mass CA by the capillary force $f_{c.gap}$ [N] in the first coupling portion 31B-1 is $a_{gap}$ [m/s²], the second condition that needs to be satisfied in the first coupling portion 31B-1 that is not coupled to the second micro channel 32 is represented by the following equation.

[Math 29]

$$a_{gap} = \frac{f_{c.gap} - f_{R1}}{\rho V} = \frac{1}{4\rho h H W}\left(4W\sigma\cos\theta - 4\left(\frac{L_{DT}}{L_{DP}}H\tau_{w.sp} + \frac{(1+\varepsilon)}{2}W\tau_{w.dp}\right)h\right) =$$

$$\left(\frac{1}{\rho H W}\right)\left(\frac{W\sigma\cos\theta}{h} - \left(\frac{L_{DT}}{L_{DP}}H\tau_{w.sp} + \frac{(1+\varepsilon)}{2}W\tau_{w.dp}\right)\right) > 0 \qquad (17)$$

Also in consideration of the gravity $f_{R2}$ [N], a condition that needs to be satisfied in the first coupling portion 31B-1 is converted into the following equation.

[Math 30]

$$a_{gap} = \frac{f_{c.gap} - (f_{R1} + f_{R2})}{\rho V}$$

$$= \frac{1}{4\rho hHW}\left(4W\sigma\cos\theta - 4\left(\frac{L_{DT}}{L_{DP}}H\tau_{w.sp} + \frac{(1+\varepsilon)}{2}W\tau_{w.dp}\right)h\right.$$

$$\left. - 4\rho hHWg\right)$$

$$= \left(\frac{1}{\rho HW}\right)\left(\frac{W\sigma\cos\theta}{h} - \left(\frac{L_{DT}}{L_{DP}}H\tau_{w.sp} + \frac{(1+\varepsilon)}{2}W\tau_{w.dp}\right)\right) - g$$

$$> 0 \qquad (18)$$

Also in consideration of the inertial force $f_{R3}$ [N], Equation (3) is converted into the following equation.
[Math 31]

$$a_{gap} = \frac{f_{c.gap} - (f_{R1} + f_{R2} + f_{R3})}{\rho V}$$

$$= \frac{1}{4\rho hHW}\left\{4W\sigma\cos\theta - 4\left(\frac{L_{DT}}{L_{DP}}H\tau_{w.sp} + \frac{(1+\varepsilon)}{2}W\tau_{w.dp}\right)h - 4\rho hHW(g + a_{vc})\right\}$$

$$= \left(\frac{1}{\rho HW}\right)\left(\frac{W\sigma\cos\theta}{h} - \left(\frac{L_{DT}}{L_{DP}}H\tau_{w.sp} + \frac{(1+\varepsilon)}{2}W\tau_{w.dp}\right)\right) - (g + a_{vc}) > 0 \qquad (19)$$

Similarly, the electromagnetic force $f_{R4}$ [N] can also be added as the resistance force to the equation described above.

Further, in a case where the capillary force generated in the second coupling portion 31B-2 coupled to the second micro channel 32 is $f_{c.gap.btm}$ [N], $f_{c.gap.btm}$ [N] is as follows.
[Math 32]

$$f_{c.gap.btm} = 2W\sigma\cos\theta \qquad (20)$$

The fluid mass CA is assumed to move in the horizontal direction. In a case where acceleration generated in the fluid mass CA by the capillary force in the second coupling portion 31B-2 is $a_{gap.btm}$ [m/s$^2$], a condition equation being the second condition that needs to be satisfied in the second coupling portion 31B-2 is the following equation.
[Math 33]

$$a_{gap.btm} = \frac{f_{c.gap.btm} - f_{R1}}{\rho V} = \frac{1}{4\rho hHW}\left(2W\sigma\cos\theta - 4\left(\frac{L_{DT}}{L_{DP}}H\tau_{w.sp} + \frac{(1+\varepsilon)}{2}W\tau_{w.dp}\right)h\right)$$

$$= \left(\frac{1}{\rho HW}\right)\left(\frac{W\sigma\cos\theta}{2h} - \left(\frac{L_{DT}}{L_{DP}}H\tau_{w.sp} + \frac{(1+\varepsilon)}{2}W\tau_{w.dp}\right)\right) > 0 \qquad (21)$$

Also in consideration of the gravity $f_{R2}$ [N], a condition equation as the second condition that needs to be satisfied in the second coupling portion 31B-2 is as follows.
[Math 34]

$$a_{gap.btm} = \frac{f_{c.gap.btm} - (f_{R1} + f_{R2})}{\rho V}$$

$$= \frac{1}{4\rho hHW}\left(2W\sigma\cos\theta - 4\left(\frac{L_{DT}}{L_{DP}}H\tau_{w.sp} + \frac{(1+\varepsilon)}{2}W\tau_{w.dp}\right)h - 4\rho hHWg\right)$$

$$= \left(\frac{1}{\rho HW}\right)\left(\frac{W\sigma\cos\theta}{2h} - \left(\frac{L_{DT}}{L_{DP}}H\tau_{w.sp} + \frac{(1+\varepsilon)}{2}W\tau_{w.dp}\right)\right) - g > 0 \qquad (22)$$

Also in consideration of the inertial force $f_{R3}$ [N], a condition equation of the second condition is as follows.
[Math 35]

$$a_{gap.btm} = \frac{f_{c.gap.btm} - (f_{R1} + f_{R2} + f_{R3})}{\rho V}$$
$$= \frac{1}{4\rho hHW}\left\{2W\sigma\cos\theta - 4\left(\frac{L_{DT}}{L_{DP}}H\tau_{w.sp} + W\tau_{w.dp}\right)h - 4\rho hHW(g + a_{vc})\right\}$$
$$= \left(\frac{1}{\rho HW}\right)\left(\frac{W\sigma\cos\theta}{2h} - \left(\frac{L_{DT}}{L_{DP}}H\tau_{w.sp} + \frac{(1+\varepsilon)}{2}W\tau_{w.dp}\right)\right) - (g + a_{vc}) > 0 \qquad (23)$$

Similarly, the electromagnetic force $f_{R4}$ can also be added as the resistance force to the equation described above.

[Third Condition]

The third condition is that a sum of work applied to the fluid mass CA in the straight pipe portion 31A and work applied to the fluid mass CA by the coupling portion 31B is positive. In order for the vapor chamber 1 to function, the fluid mass CA needs to pass through the coupling portion 31B without resting. When Equations (16) to (19) and Equations (20) to (23), that is, the second condition is satisfied, the fluid mass CA performs a positive acceleration motion in a direction of a flow even in the coupling portion 31B, and thus the fluid mass CA can pass through the coupling portion 31B.
However, even in a case where the second condition is not satisfied, when the fluid mass CA passes through the coupling portion 31B and approaches the inner wall surface of the partially continuous straight pipe portion 31A again, the fluid mass CA can pass through the coupling portion 31B in a case of having a speed of magnitude of 0 or more in substantially the same direction as an original traveling direction of the coolant CO. A condition for having the speed is that the coolant CO can pass through the coupling portion 31B when a total sum of work received by the fluid mass CA in the straight pipe portion 31A and work received by the fluid mass CA in the coupling portion 31B is positive, that is, work is positive with respect to the traveling direction of the coolant CO. This is the third condition, and the third condition is given by the following equation.
[Math 36]

$$\rho V\left(L_{DT}a + (2W)\left(\varepsilon\alpha_{gap} + (1-\varepsilon)\alpha_{gap.btm}\right)\right) > 0 \qquad (24)$$

The equation described above indicates work performed by a force applied to the fluid mass CA from P1 to P2 illustrated in FIG. 9, that is, in the straight pipe portion 31A, and a second term of a left side indicates work performed by a force applied to the fluid mass CA from P2 to P3 (a length 2W of the coupling portion 31B in the direction in which the fluid mass CA flows) illustrated in FIG. 9, that is, in the coupling portion 31B. Equation (24) indicates that a sum of the work is positive.

[Fourth Condition]

The fourth condition is that a total amount of evaporation latent heat $Q_{LH}$ [J/kg] per unit time of the fluid mass CA returning from the capillary channel 4 to the heat receiving portion 3 exceeds an input heat amount $Q_{in}$ [W] per unit time from the heat source body 2 to the heat receiving portion 3. In the vapor chamber 1, the total amount of the evaporation latent heat $Q_{LH}$ of the coolant CO corresponding to an amount of the coolant CO returning to the heat source body 2 again per unit time in a series of cycles of the coolant CO exceeds the input heat amount $Q_{in}$ [W] generated from the heat source body 2, and thus the coolant CO of an amount needed for maintaining continuous evaporation can be continuously supplied to the heat receiving portion 3 inside a surface in contact with the heat source body 2. Conversely, when the coolant CO of the amount needed for maintaining the continuous evaporation of the coolant CO cannot be supplied to the heat receiving portion 3, a phenomenon of so-called dryout occurs. When the dryout occurs, latent heat cannot be continuously transported by the coolant CO, and thermal performance of the vapor chamber 1 decreases, and, as a result, an increase in heat resistance of the vapor chamber 1 is caused.
Herein, an input heat amount per unit time from the heat source body 2 in the heat receiving portion 3 is set as $Q_{in}$ [W], and evaporation latent heat per unit mass of the fluid mass CA of the coolant CO is set as $Q_{LH}$ [J/kg]. Further, as illustrated in FIGS. 10A and 10B, a curved line constituting an outer edge of the heat receiving portion 3 is set as a circle C. The number of the first micro channels 31 toward the circle C is set as $N_{1.C}$, a cross-sectional area of a cross section orthogonal to a direction in which the fluid mass CA of an i-th ($i = 1$ to $N_{1.C}$) first micro channel 31 flows is set as $S_{Al.i}$ [m²], and a traveling speed at which the fluid mass CA of the i-th first micro channel 31 flows is set as $v_{1.i}$ [m/s]. Further, the number of the second micro channels 32 in contact with the heat receiving portion 3 is set as $N_{2.P}$, a cross-sectional area of a cross section orthogonal to a direction in which the coolant CO of a j-th (j = 1 to $N_{2.P}$) second micro channel 32 flows is set as $S_{A2.j}$ [m²], and a traveling speed at which the fluid mass CA flows back to the heat receiving portion 3 in the j-th second micro channel 32 is set as $v_{2.j}$ [m/s]. In order for the vapor chamber 1 to continue to exhibit desired performance without the dryout, the following relational equation needs to be satisfied.
[Math 37]

$$\rho Q_{LH} \left\{ \sum_{i=1}^{N_{1.C}} S_{A1.i}\, v_{1.i} + \sum_{j=1}^{N_{2.P}} S_{A2.j}\, v_{2.j} \right\} > Q_{in} \qquad (25)$$

In the designing method of the vapor chamber 1 according to the present embodiment, a kind of the coolant CO and a material of the vapor chamber 1 are selected and a value of a designing parameter according to a channel structure of the capillary channel 4 is also determined in such a way as to satisfy all of the first condition, the second condition, and the fourth condition, or satisfy all of the first condition, the third condition, and the fourth condition. Such a designing parameter includes a parameter that prescribes a length of the capillary channel 4 and the cross section orthogonal to the direction in which the coolant CO flows. In this way, even when the resistance force $F_R$ such as the viscous force $f_{R1}$ [N] and the gravity $f_{R2}$ [N] acts as the resistance force of flow of the coolant CO, circulation of the coolant CO can be achieved. Furthermore, unevenness of a coolant distribution is reduced, and thus the coolant CO can pass through, without resting, the coupling portion 31B being a portion where the inner wall surface is not continuous inside the first micro channel 31 having such a structure that at least one surface of the inner wall surfaces is intermittent. Furthermore, the heat receiving portion 3 can have such a micro channel structure that can continuously perform transport from the heat receiving portion 3 to a condensing portion without causing the dryout.
An operation of the vapor chamber 1 having the configuration described above is described. As illustrated in FIGS. 4A and 4C, the heat generated from the heat source body 2 is transmitted to the heat receiving portion 3, and the coolant CO present in the heat receiving portion 3 is vaporized by the heat. The vaporized coolant CO is diffused to the entire internal space 20 through the vapor channel 5. Then, most of the vaporized coolant CO reaches an outer edge of the internal space 20, transmits the heat to the housing 50, and also condenses.
The coolant CO that condenses in the internal region 10b of the upper member 11 is sent to the capillary channel 4 by a capillary phenomenon in the groove portion 10d of the internal region 10b. In the capillary channel 4, the condensing coolant CO returns to the heat receiving portion 3 again by the capillary phenomenon. As described above, a circulation cycle of the coolant CO described above is provided inside the internal space 20, and thus cooling of the heat source body 2 is achieved.

[Flow of Design of Vapor Chamber]

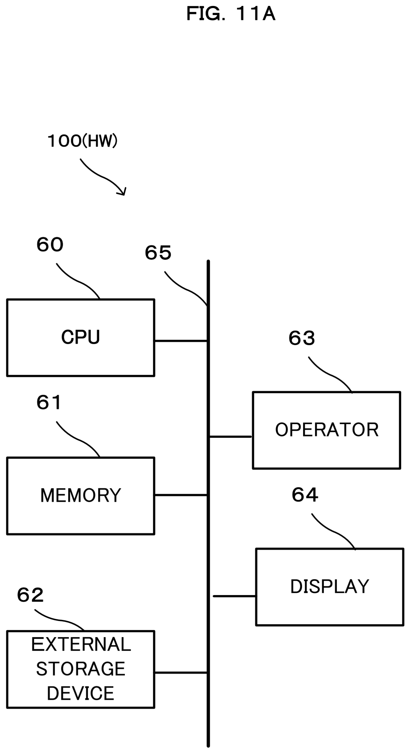

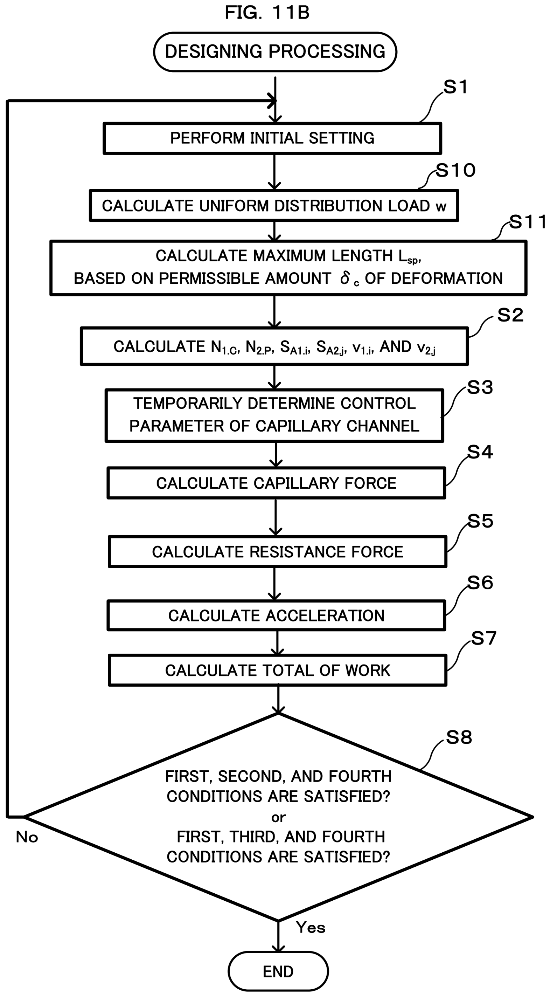

As illustrated in FIG. 11A, first, design of the vapor chamber 1 is performed by execution of a software program read by a CPU 60 from an external storage device 62 into a memory 61 according to an operation via an operator 63 in a computer HW including the CPU 60, the memory 61, the external storage device 62, the operator 63, a display 64, and an internal bus 65. An execution result is displayed on, for example, the display 64. An information processing device 100 having the function achieved by execution of the program by the computer performs processing of calculating the maximum interval $L_{sp.max}$ [mm] between the adjacent reinforcing members and processing of determining whether the first condition to the fourth condition are satisfied, that is, designing processing (designing method) of the vapor chamber 1 illustrated in FIG. 11B.
As illustrated in FIG. 11B, first, the information processing device 100 performs initial setting (step S1). In the initial setting, a size, a shape, and a heat generation amount of the heat source body 2 are set, a kind and an amount of the coolant CO are set, and an entire size of the vapor chamber 1, a position and a size of the heat receiving portion 3, and a shape, a size, and the like of a portion other than the capillary channel 4 of the vapor chamber 1 are set. Pure water, an organic solvent, or a mixture of these is selected as the coolant CO, and copper and the like are used as a member that can provide an airtightness structure as the material of the vapor chamber 1. In this way, the input heat amount $Q_{in}$ [W] per unit time, evaporation latent heat $Q_{LH}$ [J/kg] per unit mass of the fluid mass, the density $\rho$ [kg/m³] of the coolant CO, the surface tension $\sigma$ [N/m] of the fluid mass CA on the inner wall surface, and the contact angle $\theta$ [rad] between the coolant CO and the inner wall surface are determined. Further, the length h [m] and the volume V [m³] of the fluid mass CA are determined by substituting a length from the heat receiving portion 3 to the outer edge of the internal space 20, but can be set to any value. In step S1, a material and a size of the housing 50 are determined, and thus the modulus of longitudinal elasticity E and the moment of inertia of area I are determined.

Subsequently, the information processing device 100 calculates the uniform distribution load w [N/mm$^2$] (step S10). Herein, the uniform distribution load w [N/mm$^2$] by the internal pressure increase is calculated based on the saturated vapor pressure $P_{s.vc}$ [Pa] of the coolant CO at an internal temperature $T_{vk}$ [K] of the vapor chamber 1 in the high temperature process in which the vapor chamber 1 operates. When the coolant CO is a pure substance, $P_{s.vc}$ [Pa] is calculated by the Antoine equation, and, when the coolant CO is a mixed substance, $P_{s.vc}$ [Pa] is calculated by the Wilson equation. Further, in a case of the uniform distribution load w [N/mm$^2$] of an external force, $P_{s.vc}$ [Pa] is calculated based on an external force expected to be applied to the vapor chamber 1. For example, an external force per unit area according to the housing 50 can be set as the uniform distribution load w [N/mm$^2$].

Subsequently, the information processing device 100 calculates the maximum interval $L_{sp.max}$ [mm] between the adjacent spacers 42, based on the permissible amount $\delta_c$ of bending deformation of the housing 50 (step S11). Note that, in the present embodiment, a diameter of a bottom surface of the spacer 42 having a columnar shape is assumed to be fixed.

Subsequently, the information processing device obtains $N_{1.C}$, $N_{2.P}$, $S_{A1.i}$ [m$^2$], $S_{A2.j}$ [m$^2$], $v_{1.i}$ [m/s], and $v_{2.j}$ [m/s] that satisfy Equation (25) described above, based on the set size of the heat receiving portion 3 (step S2). Herein, in a case where each of values of $S_{AI.i}$ [m$^2$] is the same, each of values of $S_{A2.j}$ [m$^2$] is the same, and each of values of $v_{1.i}$ [m/s] and each of values of $v_{2.j}$ [m/s] are the same, the values are easily calculated. In this way, the cross-sectional areas of the first micro channel 31 and the second micro channel 32, and the speed of the fluid mass CA are determined. Note that, in step S2, a computation is performed on an assumption that the spacer 42 having the maximum interval $L_{sp.max}$ [mm] set in step S11 described above is present, and a channel is not present in a portion in which the coolant CO does not flow.

Subsequently, the information processing device sets a size of the capillary channel 4 (step S3). Herein, with regard to the first micro channel 31, values of designing parameters according to a channel structure such as H [m], W [m], $L_{DT}$ [m], $L_{DP}$ [m], $\varepsilon$, P1, and P2 are set. The values of the designing parameters are restrained by $N_{1.C}$, $N_{2.P}$, $S_{A1.i}$ [m$^2$], $S_{A2.j}$ [m$^2$], $v_{1.i}$ [m/s], and $v_{2.j}$ [m/s] obtained in step S2.

Subsequently, the information processing device calculates the capillary forces $f_c$ [N], $f_{c.gap}$ [N], and $f_{c.gap.btm}$ [N] by using Equation (5), Equation (10), and Equation (14) (step S4). Herein, the value determined and set so far is used.

Subsequently, the information processing device calculates the resistance force $F_R$ [N] (step S5). First, the viscous force $f_{R1}$ [N] is obtained by using Equation (6). $\tau_{w.sp}$ [Pa] and $\tau_{w.dp}$ [Pa] in Equation (6) are obtained by setting the coolant CO as a Newtonian fluid, and multiplying, by a viscous coefficient of the coolant CO, a speed gradient on a wall surface based on the value of $v_{1.i}$ [m/s] and the value of $v_{2.j}$ [m/s] obtained in step S2. The gravity $f_{R2}$ [N], the inertial force $f_{R3}$ [N], and the electromagnetic force $f_{R4}$ [N] are additionally calculated according to a situation where the vapor chamber 1 is used.

Subsequently, the information processing device calculates the accelerations a, $a_{gap}$, and $a_{gap.btm}$ by using Equation (3), Equations (11) to (13), and Equations (15) to (17) (step S6), and calculates a total of work by using Equation (18) (step S7).

Subsequently, the information processing device determines whether the computation result so far satisfies all of the first condition, the second condition, and the fourth condition, or whether the computation result satisfies the first condition, the third condition, and the fourth condition (step S8). When the conditions are not satisfied (step S8; No), the information processing device returns to step S1, and the processing in steps S1 to S8 is repeated until Yes is determined in step S8. During the repetition, the value of the designing parameter according to the channel structure is changed until the first condition to the fourth condition are satisfied.

When the computation result satisfies all of the first condition, the second condition, and the fourth condition, or satisfies the first condition, the third condition, and the fourth condition (step S8; Yes), the information processing device ends the designing processing on an assumption that the value of the designing parameter according to the channel structure of the capillary channel 4 has been acquired.

After the designing processing, the vapor chamber 1 is manufactured based on the designing method. In a manufacturing step of the vapor chamber 1, the vapor chamber 1 is manufactured by providing the reinforcing member (the spacer 42 and the bonding protrusion 17) in the internal space 20 of the housing 50 in such a way that, in a case where the permissible amount of the bending deformation amount of the housing 50 is $\delta_c$ [mm], the modulus of longitudinal elasticity of the housing 50 is E [N/mm$^2$], the moment of inertia of area of the housing 50 is I [mm$^2$], and the uniform distribution load that is the load per unit length applied to the housing 50 by the internal pressure or the external pressure generated in the internal space 20 is w [N/mm], the interval $L_{sp}$ [mm] between the reinforcing members (the spacers 42 and the bonding protrusions 17) adjacent to each other satisfies Equation (6) described above. Further, in the manufacturing method, the housing 50 having the channel structure of the capillary channel 4 based on the determined value of the designing parameter is constituted from the selected material, and the selected coolant CO is encapsulated in the internal space 20 of the housing 50, and thus the vapor chamber 1 is manufactured.

The vapor chamber 1 manufactured based on the designing method has the coolant CO, the material of the vapor chamber 1, and the channel structure of the capillary channel 4 that set a bending deformation amount of the housing 50 by high heat within the permissible amount $\delta_c$, and also satisfy all of the first condition, the second condition, and the fourth condition, or satisfy all of the first condition, the third condition, and the fourth condition. As long as the first condition to the fourth condition are satisfied, the channel structure is not limited to the channel structure illustrated in FIGS. 6A to 9. For example, in FIGS. 7A and 7B, in the coupling portion 31B, the first coupling portion 31B-1 and the second coupling portion 31B-2 are alternately arranged, but the proportion can be changed when the value of ε is changed.

[Mounting of Electronic Part]

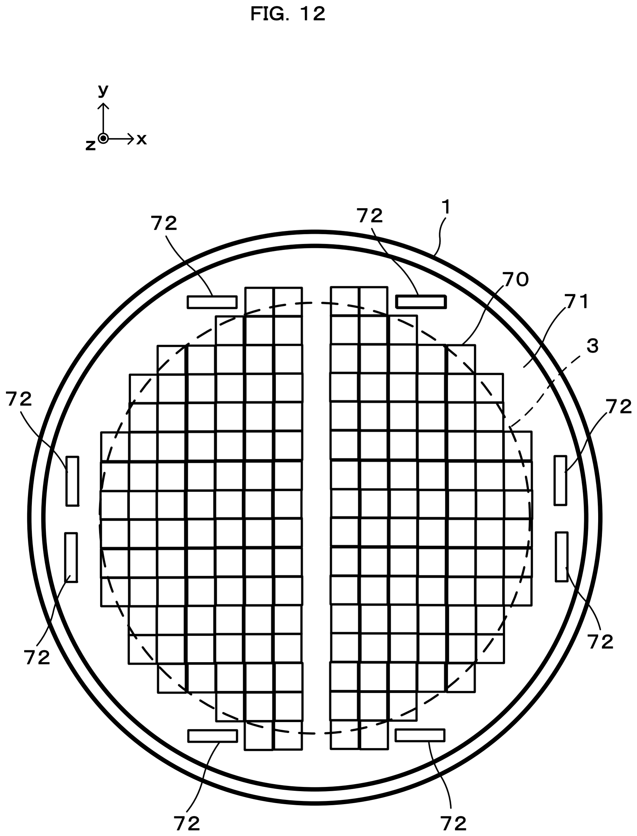

As illustrated in FIG. 12, the vapor chamber 1 can be used as a mounting substrate on which a light emitting diode (LED) element 70 is mounted. A thin circuit substrate 71 as an insulating layer is provided on an upper surface of the vapor chamber 1, the LED elements 70 are mounted at a high density on the thin circuit substrate 71, and a region where the LED elements 70 are mounted is the heat receiving portion 3. An electrode 72 that can be electrically connected to the outside is also provided in a region on the thin circuit substrate 71 other than the heat receiving portion 3.

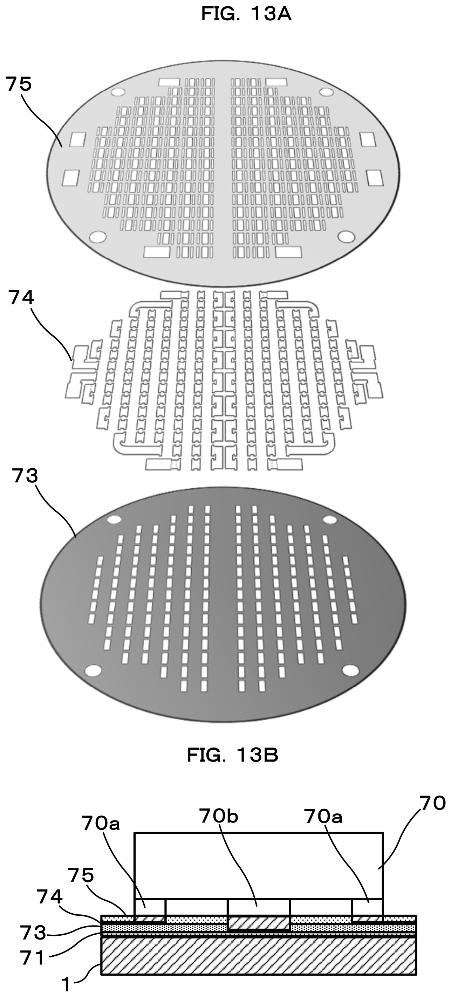

A ground layer (not illustrated) that grounds the LED element 70 is actually provided on the thin circuit substrate 71. Further, as illustrated in FIG. 13A, a lower surface resist pattern 73 that is an insulating layer, a wiring line pattern 74 that is a conductive layer, and an upper surface resist pattern 75 that is an insulating layer are provided in this order on the ground layer, and the LED element 70 is placed on the upper surface resist pattern 75. As illustrated in FIG. 13B, a signal electrode 70a of the LED element 70 is soldered to the wiring line pattern 74 via an opening of the upper surface resist pattern 75 by a reflow step. A ground electrode 70b of the LED element 70 is soldered to the ground layer via an opening of the lower surface resist pattern 73 and the opening of the upper surface resist pattern 75 by the reflow step. The vapor chamber 1 is designed in such a way as to be able to also resist a maximum temperature in a temperature profile in the reflow step.

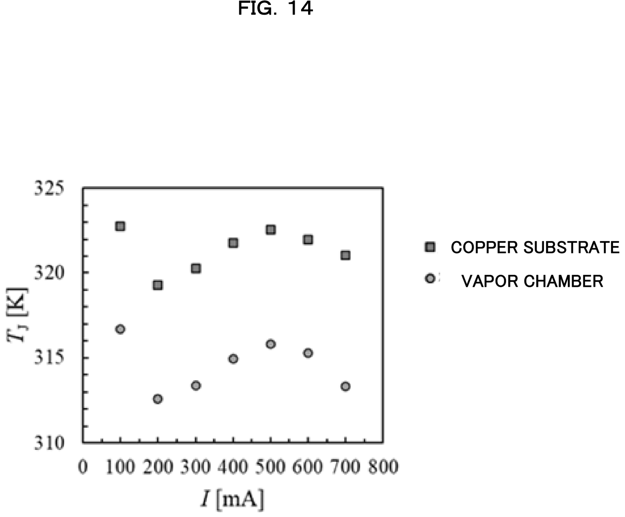

LED junction temperatures were compared between the vapor chamber 1 according to the present embodiment and a copper substrate. The junction temperature refers to a surface temperature of the LED element 70, and refers to an operation compensation temperature of the LED element 70. As illustrated in FIG. 14, it has been found out that the junction temperature could be suppressed by about 10 K further than that in the copper substrate. Further, it has been found out that, in the vapor chamber 1 according to the present embodiment, temperatures of the mounted LED elements 70 were substantially uniform regardless of a place, and a temperature distribution could be smoothed.

[Evaluation Result]

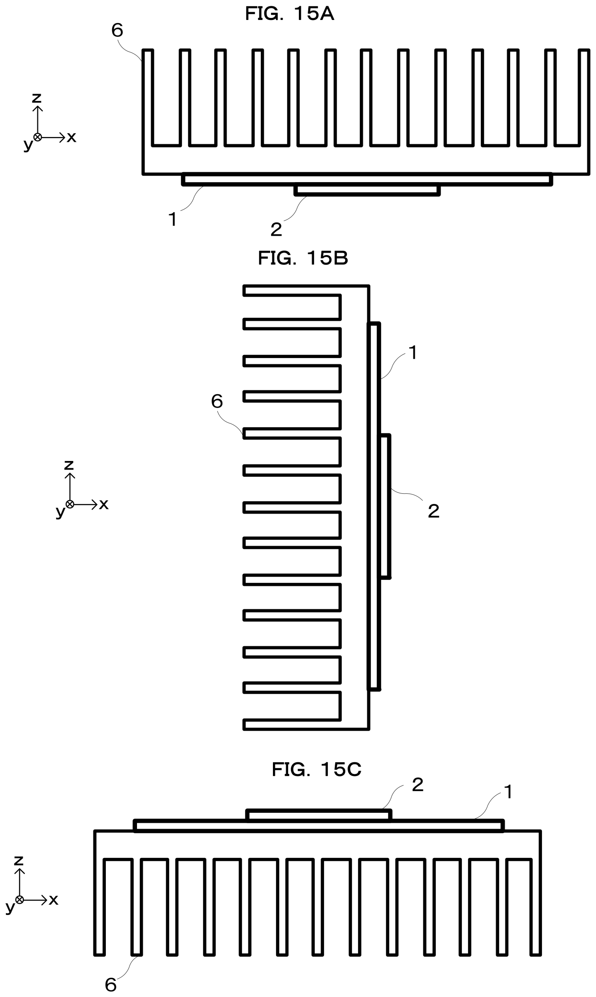

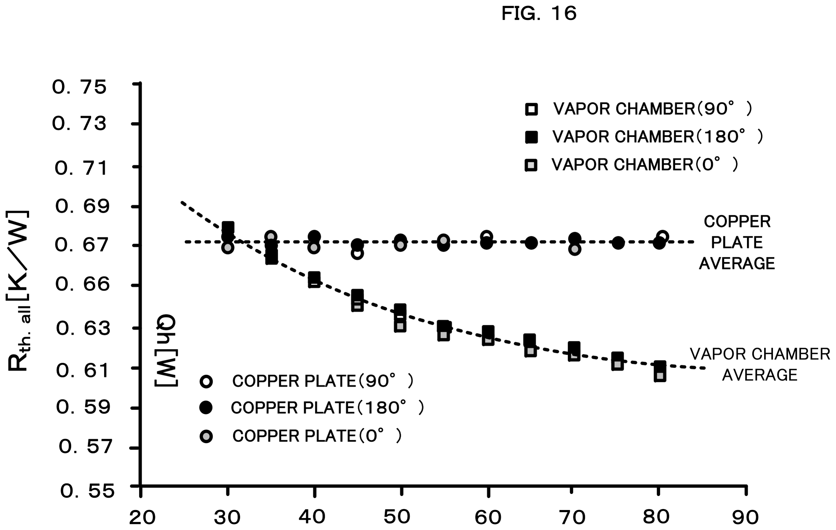

An evaluation was actually performed in the vapor chamber 1 manufactured by the designing method. The heat source body 2 was set as a ceramic heater, and cooling was performed in an aluminum heat sink 6 attached to the vapor chamber 1. As illustrated in FIGS. 15A, 15B, and 15C, installation angles of the vapor chamber 1 were set as 0 degree, 90 degrees, and 180 degrees, and each heat resistance was checked. For a sanity check of an evaluation system, a copper plate (C1020) having the same shape as that of the vapor chamber 1 was set as a comparison target, each heat resistance was calculated by the following equation, and results were compared. The evaluation result is illustrated in FIG. 16.
[Math 38]

$$R_{th.all} = \frac{T_h - T_a}{Q_h} \qquad (20)$$

Herein, $R_{th.all}$ [K·W$^{-1}$] is total heat resistance of the vapor chamber 1 and the copper plate. Further, $T_h$ [K] indicates a rear surface temperature of the ceramic heater, $T_a$ [K] indicates a room temperature, and $Q_h$ [W] indicates input power to the ceramic heater.

As illustrated in FIG. 16, the copper plate had a difference of about 0.5% in the heat resistance due to an installation posture, and this was a value caused by a characteristic of the evaluation system, and was a reference value to evaluate the heat resistance of the vapor chamber 1. As a result of an evaluation experiment, a difference in the heat resistance due to the installation posture of the vapor chamber 1 was about 0.5%, and was equal to that of the copper plate. Since a difference beyond the difference in data caused by the evaluation system was not shown, it has been confirmed that the heat resistance of the vapor chamber 1 designed by the designing method according to the present embodiment was fixed regardless of an influence of the installation posture.

Further, it has been confirmed that, even when the input power $Q_h$ [W] to the ceramic heater was increased, the total heat resistance $R_{th.all}$ [K·W$^{-1}$] of the copper plate hardly changed, but, as the input power $Q_h$ [W] to the ceramic heater was increased, the total heat resistance $R_{th.all}$ [K·W$^{-1}$] of the vapor chamber 1 decreased. This indicated that the vapor chamber 1 had a more excellent heat diffusion effect than the copper plate.

In this way, a designing parameter that prescribes a micro channel structure that satisfies Equation (3) is determined in consideration of the resistance force $F_R$ acting on the fluid mass CA of the coolant CO, and thus the coolant CO can move against the various resistance forces $F_R$ [N] on the coolant CO, and circulation of the coolant CO is achieved. Further, for the capillary channel 4 having any shape, a condition equation that needs to be satisfied by the shape of the capillary channel 4 can be acquired by appropriately defining a value of a parameter caused by a geometric shape, such as the volume V of the fluid mass CA, according to a shape of a channel.

As described above in detail, according to the embodiment described above, since, in order to prevent deformation of the housing 50, the spacer 42 is arranged in the internal space 20 in such a way that an interval of the adjacent spacers 42 is set within $L_{sp}$ [mm], the bending deformation amount of the housing 50 by a high temperature can fall within the permissible amount $\delta_c$, and thus deformation due to the internal pressure increase by high heat or deformation by the external force can be suppressed.

Note that the spacer 42 and the bonding protrusion 17 function in order to achieve mechanical strength, but it is difficult to install a fine channel that causes the coolant CO to return by the capillary force in a portion in which the spacer 42 is installed. Thus, when the spacer 42 is excessively disposed, there is a risk that a circulation flow rate of the coolant CO required from the vapor chamber 1 cannot be achieved. Thus, according to the vapor chamber 1 according to the present embodiment, in the first micro channel 31 of the capillary channel 4 that generates the capillary force having the two-dimensional lattice pattern provided at the uniform lattice pitch P1, the capillary force $f_c$ [N] applied to the fluid mass CA of the coolant CO exceeds the resistance force $F_R$ [N] that prevents the movement of the fluid mass CA, work performed by a force that causes the fluid mass CA to move is positive as a whole, and the coolant CO and the material of the vapor chamber 1 are selected and the value of the designing parameter indicating the channel structure of the capillary channel 4 can also be determined in such a way that the dryout is not caused in the heat receiving portion 3. Thus, continuous heat diffusion can be performed without the influence of the resistance force on thermal performance. In this way, desired thermal performance can be achieved, and deformation due to the internal pressure increase by high heat or deformation by the external force can be suppressed.

Note that the bonding protrusion 17 may not be included. In this case, the spacer 42 is arranged in, for example, the two-dimensional lattice pattern, and the condition (Equation (6) described above) of the maximum interval $L_{sp.max}$ described above needs to be kept.

In the embodiment described above, the case where the vapor chamber 1 is used as the mounting substrate on which the LED element 70 is mounted is described. However, the present disclosure is not limited to this. The vapor chamber 1 can be used as a mounting substrate on which another electronic part is mounted.

In the embodiment described above, the case where the cross section of the channel orthogonal to the direction in which the fluid mass WA flows is rectangular is described, but the present disclosure is not limited to this. For example, the present disclosure can also be applied to a channel having a cross section of another polygon.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2023-70713, filed on April 24, 2023, the entire disclosure of which is incorporated by reference herein.

Industrial Applicability

The present disclosure can be applied to a vapor chamber that cools or heats a heat source body, and is suitable when the vapor chamber is used as a mounting substrate of an electronic part.

Reference Signs List

| 1 | Vapor chamber |
|---|---|
| 2 | Heat source body (cooled object) |
| 3 | Heat receiving portion |
| 4 | Capillary channel |
| 5 | Vapor channel |
| 6 | Heat sink |
| 10 | Lower member |
| 10a | Outer edge portion |
| 10b | Internal region |

| 10c | Dimple |
| 10d | Groove portion |
| 11 | Upper member |
| 12 | Intermediate member |
| 12a | Outer edge portion |
| 12b | Internal region |
| 12c | Through hole |
| 15 | Capillary channel provision region |
| 16 | Vapor channel provision region |
| 17 | Bonding protrusion |
| 20 | Internal space (hermetically sealed space) |
| 31 | First micro channel |
| 31A | Straight pipe portion |
| 31B | Coupling portion |
| 31B-1 | First coupling portion |
| 31B-2 | Second coupling portion |
| 32 | Second micro channel |
| 40, 41 | Bonding protrusion |
| 42 | Spacer |
| 50 | Housing |
| 60 | CPU |
| 61 | Memory |
| 62 | External storage device |
| 63 | Operator |
| 64 | Display |
| 65 | Internal bus |
| 70 | LED element |
| 70a | Signal electrode |
| 70b | Ground electrode |
| 71 | Thin circuit substrate |
| 72 | Electrode |
| 73 | Lower surface resist pattern |
| 74 | Wiring line pattern |
| 75 | Upper surface resist pattern |
| 100 | Information processing device |
| CO | Coolant |
| CA | Fluid mass |

**Claims**

1. A designing method of a vapor chamber executed by an information processing device, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,
in a case where a permissible amount of a bending deformation amount of the housing is $\delta_c$ [mm], a modulus of longitudinal elasticity of the housing is E [N/mm$^2$], a moment of inertia of area of the housing is I [mm$^2$], and a uniform distribution load that is a load per unit length applied to the housing by an internal pressure or an external pressure generated in the internal space is w [N/mm], an interval $L_{sp}$ [mm] between the reinforcing members adjacent to each other is prescribed in such a way as to satisfy an equation below.

[Math 1]

$$L_{sp} < \sqrt[4]{\frac{384\delta_c EI}{5w}}$$

2. The designing method of a vapor chamber according to claim 1, wherein

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,
the coolant and a material of the vapor chamber are selected and a value of a designing parameter according to a channel structure of the capillary channel is also determined in such a way as to satisfy all of the first condition, the second condition, and the fourth condition, or satisfy all of the first condition, the third condition, and the fourth condition.

3. A designing method of a vapor chamber executed by an information processing device, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,

the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition.

4. The designing method of a vapor chamber according to claim 3, wherein,

in a case where acceleration generated in the fluid mass by a capillary force in the straight pipe portion is a [m/s$^2$],
a density of the fluid mass is $\rho$ [kg/m$^3$],
a volume of the fluid mass is V [m$^3$],
a capillary force in the straight pipe portion is f$_c$ [N], and
a resistance force that prevents a movement of the fluid mass by the capillary force is F$_R$ [N],

[Math 2]

$$a = \frac{f_c - F_R}{\rho V} > 0$$

is a condition equation representing the first condition,
the capillary channel includes
a second micro channel that extends in a thickness direction of the housing, and is two-dimensionally arranged at a uniform arrangement pitch in a surface direction of the housing,
the coupling portion includes

a first coupling portion that is not coupled to the second micro channel, and
a second coupling portion coupled to the second micro channel,

in a case where acceleration generated in the fluid mass by a capillary force in the first coupling portion is a$_{gap}$ [m/s$^2$],
acceleration generated in the fluid mass by a capillary force in the second coupling portion is a$_{gap.btm}$ [m/s$^2$]
the capillary force generated in the first coupling portion is f$_{c.gap}$ [N], and
the capillary force generated in the second coupling portion is f$_{c.gap.btm}$ [N],

[Math 3]

$$a_{gap} = \frac{f_{c.gap} - F_R}{\rho V} > 0, \quad a_{gap.btm} = \frac{f_{c.gap.btm} - F_R}{\rho V} > 0$$

is a condition equation representing the second condition,
in a case where a length of the straight pipe portion in a direction in which the fluid mass flows is L$_{DT}$ [m],
a length of the coupling portion in a direction in which the fluid mass flows is 2W [m], and
a proportion of the number of the first coupling portions to the number of the coupling portions in which the fluid mass is present is $\varepsilon$,

[Math 4]

$$\rho V \left( L_{DT} a + (2W)\left(\varepsilon \alpha_{gap} + (1 - \varepsilon)\alpha_{gap.btm}\right)\right) > 0$$

is a condition equation representing the third condition, and,
in a case where an input heat amount per unit time from the cooled object in the heat receiving portion is Q$_{in}$ [W],
evaporation latent heat per unit mass of the fluid mass is Q$_{LH}$ [J/kg],
the number of the first micro channels in contact with an outer edge of the heat receiving portion is N$_{1.C}$,
the number of the second micro channels in contact with the heat receiving portion is N$_{2.P}$,

a cross-sectional area of a cross section orthogonal to a direction in which the fluid mass flows in an i-th (i = a natural number of 1 to $N_{1.C}$) first micro channel in contact with the outer edge of the heat receiving portion is $S_{A1.i}$ [m$^2$],

a cross-sectional area of a cross section orthogonal to a direction in which the fluid mass flows in a j-th (j = a natural number of 1 to $N_{2.P}$) second micro channel in contact with the heat receiving portion is $S_{A2.j}$ [m$^2$],

a speed at which the fluid mass flows in the i-th first micro channel in contact with the outer edge of the heat receiving portion is $v_{1.i}$ [m/s], and

a speed at which the fluid mass flows in the j-th second micro channel in contact with the heat receiving portion is $v_{2.j}$ [m/s],

[Math 5]

$$\rho Q_{LH} \left\{ \sum_{i=1}^{N_{1,C}} S_{A1.i}\, v_{1.i} + \sum_{j=1}^{N_{2,P}} S_{A2.j}\, v_{2.j} \right\} > Q_{in}$$

is a condition equation representing the fourth condition.

5. The designing method of a vapor chamber according to claim 4, wherein

the straight pipe portion has a rectangular cross section orthogonal to a direction in which the fluid mass flows, in a case where a distance between inner wall surfaces facing each other in the thickness direction in the straight pipe portion is 2H [m],

a distance between inner wall surfaces facing each other in the surface direction in the straight pipe portion is 2W [m],

surface tension of the fluid mass on the inner wall surface is σ [N/m], and

a contact angle between the fluid mass and the inner wall surface is θ [rad],

a capillary force $f_c$ [N] generated in the fluid mass in the straight pipe portion is prescribed by

[Math 6]

$$f_c = 4(H + W)\sigma \cos \theta$$

a capillary force $f_{c.gap}$ [N] generated in the fluid mass in the first coupling portion is prescribed by

[Math 7]

$$f_{c.gap} = 4W\sigma \cos \theta$$

a capillary force $f_{c.gap.btm}$ [N] generated in the fluid mass in the second coupling portion is prescribed by

[Math 8]

$$f_{c.gap.btm} = 2W\sigma \cos \theta$$

6. The designing method of a vapor chamber according to claim 5, wherein,

in a case where a length of the fluid mass in a direction in which the fluid mass flows is h [m],

an arrangement pitch of the straight pipe portion in a direction in which the fluid mass flows is $L_{DP}$ [m],

shearing stress generated in an inner wall surface along the thickness direction in the first micro channel is $\tau_{w.sp}$ [Pa], and

shearing stress generated in an inner wall surface along the surface direction in the first micro channel is $\tau_{w.dp}$ [Pa],

a viscous force $f_{R1}$ [N] included in the resistance force $F_R$ and generated in the fluid mass that flows in the first micro channel is prescribed by

[Math 9]

$$f_{R1} = 4\left(\frac{L_{DT}}{L_{DP}}H\tau_{w.sp} + \frac{(1+\varepsilon)}{2}W\tau_{w.dp}\right)h$$

7. The designing method of a vapor chamber according to claim 3, wherein a resistance force that prevents a movement of the fluid mass by the capillary force includes at least one of gravity, an inertial force, and an electromagnetic force.

8. A manufacturing method of a vapor chamber, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,
in a case where a permissible amount of a bending deformation amount of the housing is $\delta_c$ [mm], a modulus of longitudinal elasticity of the housing is E [N/mm$^2$], a moment of inertia of area of the housing is I [mm$^2$], and a uniform distribution load that is a load per unit length applied to the housing by an internal pressure or an external pressure generated in the internal space is w [N/mm], the reinforcing member is provided in the internal space of the housing in such a way that an interval $L_{sp}$ [mm] between the reinforcing members adjacent to each other satisfies an equation below.

[Math 10]

$$L_{sp} < \sqrt[4]{\frac{384\delta_c EI}{5w}}$$

9. The manufacturing method of a vapor chamber according to claim 8, wherein

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,

a condition that a sum of work performed by a force applied to the fluid mass in the straight pipe portion and work performed by a force applied to the fluid mass in the coupling portion is positive is a third condition, and

a condition that a total amount of evaporation latent heat per unit time of the fluid mass returning from the capillary channel to the heat receiving portion exceeds an input heat amount per unit time from the cooled object to the heat receiving portion is a fourth condition,

the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition,

the housing having a channel structure of the capillary channel based on a determined value of a designing parameter is made of the selected material, and

the selected coolant is encapsulated in the internal space of the housing.

10. A manufacturing method of a vapor chamber, wherein

the vapor chamber includes
a housing having a flat plate shape and having an internal space,
the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,

a condition that acceleration generated in the fluid mass by a capillary force applied to the fluid mass in the coupling portion is positive is a second condition,

a condition that a sum of work performed by a force applied to the fluid mass in the straight pipe portion and work performed by a force applied to the fluid mass in the coupling portion is positive is a third condition, and

a condition that a total amount of evaporation latent heat per unit time of the fluid mass returning from the capillary channel to the heat receiving portion exceeds an input heat amount per unit time from the cooled object to the heat receiving portion is a fourth condition,

the coolant and a material of the housing are selected and a value of a designing parameter according to a channel structure of the capillary channel is also determined in such a way as to satisfy all of the first condition, the second condition, and the fourth condition, or satisfy all of the first condition, the third condition, and the fourth condition,

the housing having a channel structure of the capillary channel based on a determined value of a designing parameter is made of the selected material, and

the selected coolant is encapsulated in the internal space of the housing.

11. A vapor chamber comprising a housing having a flat plate shape and having an internal space, wherein

the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

a plurality of reinforcing members that reinforces the housing in a thickness direction is arranged in the internal space along a surface direction of the housing, and,

in a case where a permissible amount of a bending deformation amount of the housing is $\delta_c$ [mm], a modulus of longitudinal elasticity of the housing is E [N/mm$^2$], a moment of inertia of area of the housing is I [mm$^2$], and a uniform distribution load that is a load per unit length applied to the housing by an internal pressure or an external pressure generated in the internal space is w [N/mm], an interval $L_{sp}$ [mm] between the reinforcing members adjacent to each other is prescribed in such a way as to satisfy an equation below.

[Math 11]

$$L_{sp} < \sqrt[4]{\frac{384\delta_c EI}{5w}}$$

12. The vapor chamber according to claim 11, wherein

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,
a condition that a sum of work performed by a force applied to the fluid mass in the straight pipe portion and work performed by a force applied to the fluid mass in the coupling portion is positive is a third condition, and
a condition that a total amount of evaporation latent heat per unit time of the fluid mass returning from the capillary channel to the heat receiving portion exceeds an input heat amount per unit time from the cooled object to the heat receiving portion is a fourth condition,
the vapor chamber has the coolant, a material of the vapor chamber, and a channel structure of the capillary channel that satisfy all of the first condition, the second condition, and the fourth condition, or satisfy all of the first condition, the third condition, and the fourth condition.

13. A vapor chamber having a flat plate shape comprising a housing having a flat plate shape and having an internal space, wherein

the housing includes

a heat receiving portion that receives heat from a cooled object,
a vapor channel through which a coolant vaporized in the heat receiving portion moves, and
a capillary channel through which the coolant liquefied by heat radiation is sent to the heat receiving portion by a capillary force,

the capillary channel includes
a first micro channel that is a channel having a two-dimensional lattice pattern provided at a uniform lattice pitch along a surface direction of the vapor chamber,
the first micro channel includes

a straight pipe portion that sends a fluid mass of the coolant in one direction, and
a coupling portion that couples the straight pipe portions at a lattice point of the first micro channel, and,

in a case where a condition that acceleration generated in the fluid mass by a capillary force applied to the fluid mass in the straight pipe portion is positive is a first condition,
a condition that acceleration generated in the fluid mass by a capillary force applied to the fluid mass in the coupling portion is positive is a second condition,

a condition that a sum of work performed by a force applied to the fluid mass in the straight pipe portion and work performed by a force applied to the fluid mass in the coupling portion is positive is a third condition, and

a condition that a total amount of evaporation latent heat per unit time of the fluid mass returning from the capillary channel to the heat receiving portion exceeds an input heat amount per unit time from the cooled object to the heat receiving portion is a fourth condition,

the vapor chamber has the coolant, a material of the housing, and a channel structure of the capillary channel that satisfy all of the first condition, the second condition, and the fourth condition, or satisfy all of the first condition, the third condition, and the fourth condition.

FIG. 1A

FIG. 1B

## FIG. 1C

1    CO    20    50

z
y⊗ →x

## FIG. 1D

50

1

3

2

z
y
x

FIG. 2A

11

12

10

FIG. 2B

11

12

10

## FIG. 3A

## FIG. 3B

FIG. 3C

## FIG. 4A

## FIG. 4B

FIG. 4C

## FIG. 5A

FIG. 5B

## FIG. 6A

10c

5

2W  P1

31

L$_{DT}$  L$_{DT}$

L$_{DT}$

2W

10c

10

31  10d  P1

y
z ⊙ → x

## FIG. 6B

12c  12c  12c

5

10c  32

2W

2W

31

12  P1  P2

P2  12c

y  2W
z ⊙ → x

P2

2W  12c

P

FIG. 6C

## FIG. 7A

y
z → x

31    4    31    31

| 10c | 31A | 10c | 31A | 10c | 31A | 10c |

31 → 31A 31B 31A 31B 31A 31B 31A

| 10c | 31A | 10c | 31A | 10c | 31A | 10c |

31    31    31

## FIG. 7B

4

| 32 |  |  | 32 |  |

31 → 31A 31B 31A 31B 31A 31B 31A

10

31B-2    31B-1    31B-2

z
y → x

FIG. 8A

FIG. 8B

FIG. 9

## FIG. 10A

# FIG. 10B

FIG. 11A

100(HW)

60     65

| CPU |

| OPERATOR | 63

61

| MEMORY |

64

| DISPLAY |

62

| EXTERNAL STORAGE DEVICE |

## FIG. 11B

```
          ┌─────────────────────────────┐
          │    DESIGNING PROCESSING     │
          └─────────────────────────────┘
                        │
                        ▼
          ┌─────────────────────────────┐  S1
          │    PERFORM INITIAL SETTING   │
          └─────────────────────────────┘
                        │
                        ▼
          ┌─────────────────────────────────┐  S10
          │ CALCULATE UNIFORM DISTRIBUTION  │
          │           LOAD w                │
          └─────────────────────────────────┘
                        │
                        ▼
  ┌───────────────────────────────────────────┐  S11
  │        CALCULATE MAXIMUM LENGTH L_sp,       │
  │ BASED ON PERMISSIBLE AMOUNT δ_c OF DEFORMATION │
  └───────────────────────────────────────────┘
                        │
                        ▼
  ┌───────────────────────────────────────────┐  S2
  │ CALCULATE N_1.C, N_2.P, S_A1.i, S_A2.j, v_1.i, AND v_2.j │
  └───────────────────────────────────────────┘
                        │
                        ▼
        ┌─────────────────────────────┐  S3
        │  TEMPORARILY DETERMINE CONTROL │
        │ PARAMETER OF CAPILLARY CHANNEL │
        └─────────────────────────────┘
                        │
                        ▼
        ┌─────────────────────────────┐  S4
        │   CALCULATE CAPILLARY FORCE  │
        └─────────────────────────────┘
                        │
                        ▼
        ┌─────────────────────────────┐  S5
        │   CALCULATE RESISTANCE FORCE │
        └─────────────────────────────┘
                        │
                        ▼
        ┌─────────────────────────────┐  S6
        │    CALCULATE ACCELERATION    │
        └─────────────────────────────┘
                        │
                        ▼
        ┌─────────────────────────────┐  S7
        │    CALCULATE TOTAL OF WORK   │
        └─────────────────────────────┘
                        │
                        ▼
```

CALCULATE MAXIMUM LENGTH $L_{sp}$, BASED ON PERMISSIBLE AMOUNT $\delta_c$ OF DEFORMATION

CALCULATE $N_{1.C}$, $N_{2.P}$, $S_{A1.i}$, $S_{A2.j}$, $v_{1.i}$, AND $v_{2.j}$

S8

FIRST, SECOND, AND FOURTH CONDITIONS ARE SATISFIED?
or
FIRST, THIRD, AND FOURTH CONDITIONS ARE SATISFIED?

No

Yes

END

## FIG. 12

## FIG. 13A

75

74

73

## FIG. 13B

70a    70b    70a    70

75

74

73

71

1

FIG. 14

## FIG. 15A

## FIG. 15B

## FIG. 15C

FIG. 16

## INTERNATIONAL SEARCH REPORT

| International application No. |
|---|
| **PCT/JP2024/010136** |

| **A.** | **CLASSIFICATION OF SUBJECT MATTER** |
|---|---|

*F28D 15/02*(2006.01)i; *F28D 15/04*(2006.01)i; *H01L 23/427*(2006.01)i; *H05K 7/20*(2006.01)i
FI:   F28D15/02 106Z; F28D15/02 L; F28D15/02 101H; F28D15/02 102A; F28D15/04 B; H01L23/46 B; H05K7/20 Q

According to International Patent Classification (IPC) or to both national classification and IPC

| **B.** | **FIELDS SEARCHED** |
|---|---|

Minimum documentation searched (classification system followed by classification symbols)

F28D15/02; F28D15/04; H01L23/427; H05K7/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 7173402 B2 (MURATA MANUFACTURING CO., LTD.) 16 November 2022 (2022-11-16) | 11 |
| | paragraphs [0016]-[0053], fig. 1 | |
| Y | | 12 |
| A | | 1-10, 13 |
| X | JP 2019-113232 A (UNIV KAGOSHIMA) 11 July 2019 (2019-07-11) | 13 |
| | paragraphs [0013]-[0038], fig. 1-12 | |
| Y | | 12 |
| A | | 1-11 |
| A | 阿部　博之, 機械工学便覧新版Ａ基礎編Ｂ応用編, 社団法人　日本機械学会, A4-23 to A4-29, (The Japan Society of Mechanical Engineers), non-official translation (ABE, Hiroyuki. JSME Mechanical Engineers' Handbook (New Edition). A Basics. B Advanced.) in particular, A4-29, no. 10 | 1-13 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/010136**

| Patent document cited in search report | | | Publication date (day/month/year) | Patent family member(s) | | | Publication date (day/month/year) |
|---|---|---|---|---|---|---|---|
| JP | 7173402 | B2 | 16 November 2022 | US | 2023/0217631 | A1 | |
| | | | | paragraphs [0028]-[0109], fig. 1 | | | |
| | | | | WO | 2022/059517 | A1 | |
| | | | | CN | 219736078 | U | |
| JP | 2019-113232 | A | 11 July 2019 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4035155 B
- JP 2023070713 A